# EUROPÄISCHE PATENTANMELDUNG

(11) **EP 1 312 996 A2**
(43) Veröffentlichungstag der Anmeldung: **21.05.2003**
(21) Anmeldenummer: 03002161.2
(22) Anmeldetag: 21.09.1999
(51) Int. Cl.: G05B 19/418

(54) **Bearbeitungsvorrichtung und Bearbeitungswerkzeug zur Bearbeitung eines Werkstücks**

(30) Priorität: 21.09.1998 DE 19843162
(62) Teilanmeldung aus: 99947390.3
(71) Anmelder: Alfing Montagetechnik GmbH, 73433 Aalen (DE)
(72) Erfinder: Die Erfindernennung liegt noch nicht vor
(74) Vertreter: HOFFMANN - EITLE

(57) **Zusammenfassung**

Die Erfindung betrifft eine Bearbeitungsvorrichtung mit einem Bearbeitungswerkzeug (7) zur Bearbeitung eines Werkstücks (5) an einer Vielzahl von Bearbeitungsstellen, umfassend eine Erkennungseinrichtung (20; 200), die ausgelegt ist, um die jeweiligen Bearbeitungsstellen (4) am Werkstück (5) zu erkennen; wobei die Erkennungseinrichtung (20) eine an einer jeweiligen Bearbeitungsstelle (4) des Werkstücks (5) angebrachte Sendeeinrichtung (20c), die ein die Bearbeitungsstelle (4) kennzeichnendes Signal ausgibt, und eine Empfangseinrichtung (20b) zum Empfang des jeweiligen Signals umfasst.

## Beschreibung

### Gebiet der Erfindung

Die Erfindung betrifft eine Bearbeitungsvorrichtung und ein Bearbeitungswerkzeug zur Bearbeitung eines Werkstücks, insbesondere im Gebiet der Montagetechnik im Automobilbereich, wenn an einzelnen Teilen eines Kraftfahrzeuges, beispielsweise einem Zylinderblock oder einer Karosserie, eine Vielzahl von Montagevorgängen vorgenommen werden müssen. Die Erfindung ist aber nicht auf den Automobilbereich beschränkt und kann in jeder Umgebung angewendet werden, bei der ein beliebiges Werkstück an einer Vielzahl von Bearbeitungsstellen bearbeitet werden muss.

### Hintergrund der Erfindung

In der industriellen Serienfertigung, bei der eine Vielzahl von sich ständig wiederholenden Montagevorgängen, z.B. das Festdrehen von Schrauben oder Muttern, vorgenommen werden muss, ist es heutzutage üblich geworden, die Bearbeitungsvorgänge, d.h. das Festdrehen der Schrauben und Muttern, soweit wie möglich mit Automaten zu automatisieren. Beispielsweise wird eine Bearbeitungsvorrichtung mit einer Vielzahl von automatischen Drehschraubern auf einen Zylinderkopf abgesenkt, um diesen mit einem darunter liegenden Zylinderblock nach einem vorgegebenen Programm zu verschrauben. Eine Bearbeitungsparameter-Vorgabeeinrichtung stellt dabei für die einzelnen Drehschrauber unter anderem das Drehmoment und/oder den Drehwinkel ein, mit dem die einzelnen Schrauben festgezogen werden sollen. Mit einer automatischen Zuführung der Zylinderblöcke und der Zylinderköpfe, zusammen mit der Bearbeitungsvorrichtung, kann somit eine hochautomatisierte Serienfertigung erzielt werden. In diesem Fall wird die Bearbeitungsvorrichtung selbst kundenspezifisch konstruiert, d.h. die Bearbeitungsvorrichtung wird speziell auf den auszuführenden Bearbeitungsvorgang angepasst, so dass beispielsweise bei einer Änderung der Formen der Werkstücke, hier der Zylinderköpfe, eine neue Bearbeitungsvorrichtung konstruiert werden muss.

Andererseits gibt es Bearbeitungsvorgänge, die von einem Automaten oder Roboter nur schwer oder überhaupt nicht ausgeführt werden können. Außerdem gibt es Bearbeitungsvorgänge, bei denen aufgrund des Taktzyklusses Automaten nicht eingesetzt werden können und daher Einfachoder Mehrfachschrauber und andere Bearbeitungswerkzeuge zum Einsatz kommen, die von Hand geführt werden. Bei derartigen Bearbeitungsvorgängen, auch in der Serienfertigung, werden deshalb beispielsweise in der Schraubtechnik, Schraubwerkzeuge, z.B. Stabschrauber, Winkelschrauber oder Pistolenschrauber oder andere handgeführte Mehrfachschrauber verwendet. Derartige Bearbeitungswerkzeuge sind ebenfalls hoch automatisiert worden, so dass für jeden Bearbeitungsvorgang, z.B. Schraubvorgang, das Drehmoment und/oder der Drehwinkel von einer Bearbeitungsparameter-Vorgabeeinrichtung eingestellt wird und während des Schraubvorgangs das Drehmoment und/oder der Drehwinkel gemessen wird. Der Schraubvorgang wird erst dann beendet, wenn die Vorgabeparameter mit den Ist-Parametern übereinstimmen.

Natürlich ermöglicht ein derartiges von Hand geführtes Bearbeitungswerkzeug einen flexibleren Einsatz, da es lediglich mit der geeigneten Stecknuss versehen werden muss, wonach ein beliebiger Bearbeitungsvorgang ausgeführt werden kann. Ein derartiges Bearbeitungswerkzeug ist also nicht auf ein spezielles Werkstück ausgelegt, z.B. auf einen Zylinderkopf, und kann daher für beliebige Bearbeitungsvorgänge angewendet werden.

Während jedoch bei einer Bearbeitungsvorrichtung, die für ein spezielles Werkstück ausgelegt ist, wie oben beschrieben, mit Sicherheit davon ausgegangen werden kann, dass sämtliche Bearbeitungsstellen (Schraubstellen) eine Bearbeitung (einen Schraubvorgang) durchlaufen haben, ergeben sich bei der Verwendung des von Hand geführten, zum Teil automatisierten, Bearbeitungswerkzeug einige Probleme im Zusammenhang mit der Prozesssicherheit, die nachstehend erläutert werden.

Es sei beispielsweise der Fall betrachtet, bei dem eine bereits mit einigen Teilen vormontiertes Automobilkarosserie in einen vorgegebenen Bearbeitungsbereich, d.h. Montagebereich, einer Automobilfertigungsstraße kommt. Obwohl sich die Automobilkarosserie natürlich mit einer bestimmten Geschwindigkeit bewegt, sei für die Beschreibung des nachstehenden Problems zunächst angenommen, dass sich die Karosserie stationär oder zumindest relativ stationär in dem Bearbeitungsbereich befindet. Da die Automobilkarosserien verschiedenen Standards unterliegen können, beispielsweise US-Ausführung oder Europa-Ausführung, wird die Steuerung, die die einzelnen Bearbeitungswerkzeuge steuert, zunächst mit grundlegenden Daten voreingestellt, die beispielsweise auf einer Fertigungskarte aufgezeichnet sind, die an der Karosserie angebracht ist. Die Steuerung und damit das Bearbeitungswerkzeug weiß zu diesem Zeitpunkt zum Beispiel, dass 10 verschiedene M10 Schrauben und 15 M15 Schrauben angezogen werden müssen. Eine Bedienungsperson nimmt somit eine M10-Stecknuss aus dem Stecknusskasten (was auch optisch an dem Stecknusskasten angezeigt wird) und führt zehnmal einen Bearbeitungsvorgang zum Festziehen von M10 Schrauben/Muttern mit dem jeweils vorgegeben Drehmoment und/oder Drehwinkel aus. Wenn die Steuerung erfasst hat, dass 10 Bearbeitungsvorgänge mit M10 ausgeführt worden sind, gibt sie die nächste Größe M15 für eine jeweilige Anzahl von Bearbeitungsvorgängen frei. Damit wird aber lediglich sichergestellt, dass eine vorgegebene Anzahl von Bearbeitungsvorgängen vorgenommen wird, jedoch ist damit nicht abgesichert, dass dies auch tatsächlich an den richtigen Bearbeitungsstellen (Montagestellen) geschieht. Das heißt, die Bedienungsperson muss sich strikt an eine vorgegebene Reihenfolge halten, da nur dann sichergestellt ist, dass immer die richtige Bearbeitungsstelle mit den richtigen Bearbeitungsparametern bearbeitet wird.

Wie oben bereits erwähnt, ist die Karosserie jedoch nicht stationär in dem Bearbeitungsbereich, sondern bewegt sich mit einer gewissen Geschwindigkeit. Dies verschärft das voranstehend erläuterte Problem. Beispielsweise kann die Bedienungsperson bereits einige Montagestellen an der nachfolgenden Karosserie bearbeiten, so dass zwar schließlich die vorgegebene Anzahl von Schraubvorgängen durchgeführt wird, jedoch mit dem Problem, dass die gesamte Bearbeitung außer Tritt gerät und somit nicht mehr gewährleistet werden kann, dass mit Sicherheit sämtliche Schrauben auch wirklich angezogen worden sind und/oder mit dem richtigen Drehmoment/Drehwinkel angezogen worden sind (da sich ja auch das Drehmoment/der Drehmoment pro Bearbeitungsvorgang und Werkstück) ändern kann. Grundlegend ergibt sich dieses Problem, weil die Vorgabe der Drehmomente/Drehwinkel im Zusammenhang mit der Anzahl von Bearbeitungsvorgängen unabhängig von dem Aufenthaltsort des Bearbeitungswerkzeugs und nur von der Reihenfolge der Bearbeitung oder der vorgegebenen Anzahl von Arbeitsvorgängen abhängt.

### Stand der Technik

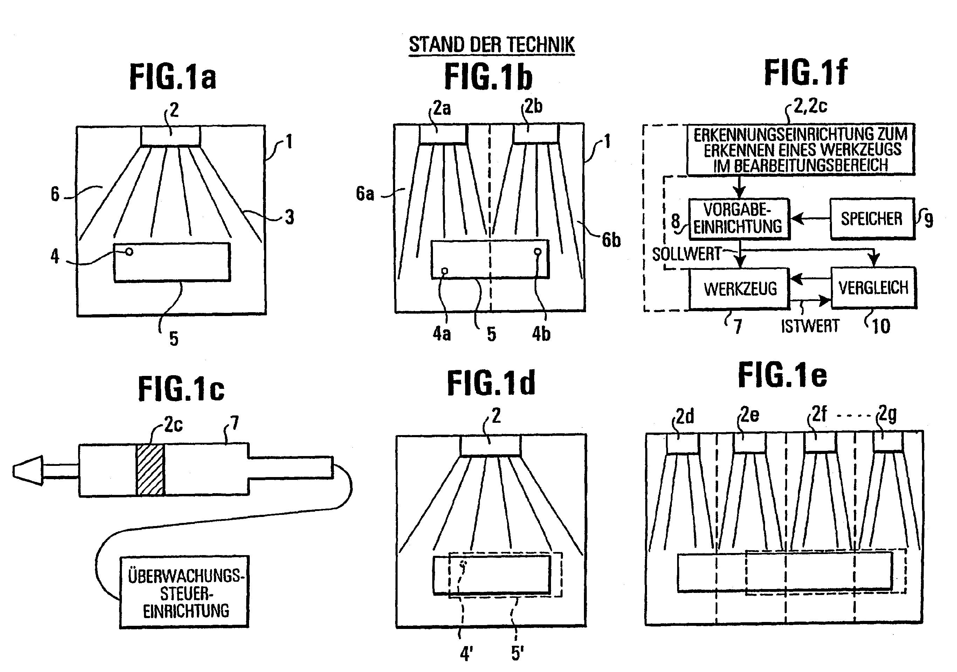

Die DE 36 37 236 C2, die den Oberbegriff der Patentansprüche 1, 22, 24 offenbart, stellt eine gewisse Prozessabsicherung bereit, so dass mit Hilfe eines "intelligenten" Bearbeitungswerkzeugs verschiedene Bearbeitungsvorgänge in beliebiger Reihenfolge durchgeführt werden können, ohne dass die Bedienungsperson hierbei irgendwelche Änderungen am Steuerungssystem vornehmen oder neue Daten eingeben muss. Die hier offenbarte Steuerungs- und Überwachungsanordnung für ein Bearbeitungswerkzeug, insbesondere ein Schraubwerkzeug, umfasst, wie in Fig. 1a gezeigt, einen im Bearbeitungsbereich 1 angebrachten Sender 2, der in einen begrenzten Raumbereich 6 hinein ein Signal 3 aussendet, das eine die betreffende Bearbeitungsstelle 4 des Werkstücks 5 in eindeutiger Weise kennzeichnende Information enthält. Wie in Fig. 1b gezeigt, ist ferner vorgesehen, dass der gesamte Bearbeitungsbereich 1 in mehrere Raumbereiche 6a, 6b mit jeweiligen Sendern 2a, 2b für die jeweiligen Bearbeitungsstellen 4a, 4b des Werkstücks 5 unterteilt wird.

Wenn sich ein Bearbeitungswerkzeug 7 mit einem daran angebrachten Empfänger 2C, wie in Fig. 1c gezeigt, in den Raumbereich 6, 6a, 6b hineinbewegt, so erfasst der am Bearbeitungswerkzeug 7 angebrachte Empfänger 2C das jeweilige Signal 3 und die Steuerungs-/Überwachungs-Einrichtung stellt das jeweilige für die Bearbeitungsstelle 4, 4a, 4b vorgesehene Drehmoment ein. Wie in Fig. 1f gezeigt, werden dann, wenn die aus Sender und Empfänger gebildete Erkennungseinrichtung das Werkzeug in einem bestimmten Raumbereich (Bearbeitungsbereich) erkennt, Soll-Bearbeitungsparameter aus einem Speicher 9 von der Vorgabe-Einrichtung 8 ausgelesen und an das Werkzeug 7 ausgegeben, wobei während der Bearbeitung ein Vergleicher 10 die Ist- mit den Soll-Werten vergleicht.

Trotz der Ausgabe eines die Montagestelle kennzeichnenden Signals kann hier jedoch nicht explizit festgestellt werden, ob die Bedienungsperson tatsächlich an der richtigen Stelle geschraubt oder gearbeitet hat, da hier lediglich erkannt wird, ob sich das Bearbeitungswerkzeug überhaupt in dem vorgegebenen Raumbereich befindet. Es findet keine Korrelation zum Aufenthaltsort des Werkstücks statt. Hier muss also davon ausgegangen werden, dass das Werkstück sich exakt an einer vorgegebenen Position und in einer vorgegebenen Ausrichtung befindet und/oder der gesamte Bearbeitungsbereich 1 muss so fein diskretisiert werden, dass jeder einzelne Raumbereich von einem jeweiligen Sender 2d, 2e, 2f, 2g wie in Fig. 1e gezeigt "ausgeleuchtet wird".

Wenn das Werkstück aber leicht versetzt ist, wie mit den gestrichelten Linien in Fig. 1d, 1e angezeigt, so kann mit der hier vorgesehenen Überwachungseinrichtung nicht erkannt werden, ob die Bedienungsperson tatsächlich an der richtigen Stelle geschraubt hat, da keinerlei Zuordnung des Werkzeugs zu dem Werkstück oder zu der Montagestelle existiert. An unzugänglichen Stellen, beispielsweise auf der Unterseite einer Karosserie, kann überhaupt nicht festgestellt werden, ob ein Bearbeitungswerkzeug an der richtigen Stelle im Raumbereich ist, es sei denn, einzelne Raumbereiche würden auch von unten mit einem oder mehreren Sendern bestrahlt.

### Aufgabe der Erfindung

Obwohl wie voranstehend erläutert mit den heutzutage verfügbaren automatisierten Bearbeitungswerkzeugen eine Bearbeitung mit vorgegebenen Bearbeitungsparametern ausgeführt werden kann, wobei durch eine Ist-Parametererfassung während der Bearbeitung auch gewährleistet wird, dass die Soll-Bearbeitungsparameter eingehalten werden, und eine Erkennung dahingehend durchgeführt werden kann, ob sich ein Bearbeitungswerkzeug in einem bestimmten Raumbereich des Bearbeitungsbereichs befindet, so wird dennoch ein höherer Grad an Prozessabsicherung benötigt, um zu verhindern, dass eine Bedienungsperson aufgrund beispielsweise einer Verwechslung von Arbeitsplänen, an falschen Bearbeitungsstellen mit ungeeigneten Bearbeitungsparametern arbeitet.

Aufgabe der vorliegenden Erfindung ist es somit, eine Bearbeitungsvorrichtung und ein Bearbeitungswerkzeug der eingangs beschriebenen Art so weiterzubilden, dass sichergestellt werden kann, dass eine Bedienungsperson eine Bearbeitung an vorgegebenen Bearbeitungsstellen des Werkstücks, unabhängig vom Aufenthaltsort des Bearbeitungswerkzeugs im Bearbeitungsbereich, tatsächlich vornimmt.

### Lösung der Aufgabe

Diese Aufgabe wird gemäß einem ersten Aspekt der Erfindung durch eine Bearbeitungsvorrichtung und ein Bearbeitungswerkzeug gemäß Patentanspruch 1, 22 dadurch gelöst, dass eine Erkennungseinrichtung bereitgestellt wird, die die jeweiligen Bearbeitungsstellen am Werkstück erkennt. Erfindungsgemäß wird nicht eine Zuordnung des Bearbeitungswerkzeugs zu einem bestimmten Raumbereich des Bearbeitungsbereichs vorgenommen, sondern die tatsächliche Bearbeitungsstelle wird erkannt, die das Bearbeitungswerkzeug bearbeiten soll. Eine Bedienungsperson kann somit in beliebiger Reihenfolge die Bearbeitungsvorgänge ausführen,
wobei jedoch immer gewährleistet ist, dass die gemäß Arbeitsplan in der Steuerung vorgegebenen Arbeitsvorgänge an den richtigen Bearbeitungsstellen vorgenommen werden.

Gemäß einem zweiten Aspekt der Erfindung wird diese Aufgabe durch eine Bearbeitungsvorrichtung gemäß Patentanspruch 24 dadurch gelöst, dass eine Erkennungseinrichtung bereitgestellt wird, die die Lage d.h. Position des Bearbeitungswerkzeugs im Bearbeitungsbereich erkennt, die Lage d.h. Position des Werkstücks im Bearbeitungsbereich erkennt und daraus die relative Lage des Bearbeitungswerkzeugs zu der jeweiligen Bearbeitungsstelle bestimmen kann. Wenn die Lage des Bearbeitungswerkzeugs und die Lage des Werkstücks feststeht, dann kann, da die Bearbeitungsstellen im Werkstück immer fest vorgegeben sind (beispielsweise in einem Speicher), immer verfolgt werden, ob das Bearbeitungswerkzeug an die richtige Bearbeitungsstelle geführt wird, auch in der richtigen Reihenfolge bei mehreren Bearbeitungsstellen, so dass auch hier, wie beim ersten Aspekt, eine Zuordnung des Bearbeitungswerkzeugs nicht etwa zum jeweiligen Raumbereich wie beim Stand der Technik, sondern zu der Bearbeitungsstelle selbst hergestellt werden kann. Hier wird also eine Art Erkennung der Bearbeitungsstelle implizit über die Lagebestimmungen durchgeführt.

### Vorteilhafte Ausführungsformen der Erfindung

Vorzugsweise umfasst die Erkennungseinrichtung (Anspruch 3-5, 10) eine Bildaufnahmeeinrichtung zur Aufnahme eines Bilds wenigstens eines Abschnitts des Werkstücks, in dem sich wenigstens eine Bearbeitungsstelle befindet. Die Bildaufnahmeeinrichtung kann vorzugsweise auf das Werkzeug aufgesetzt sein oder integral in diesem angeordnet sein. Selbst wenn eine Bedienungsperson das Bearbeitungswerkzeug beliebig im Bearbeitungsbereich umherbewegt, so wird dennoch sichergestellt, dass an der richtigen Bearbeitungsstelle gearbeitet wird, da explizit ein Bild des sich vor dem Bearbeitungswerkzeug liegenden Bereichs aufgenommen wird. Die aufgenommenen Bilder werden dann von einer Bildverarbeitungseinrichtung mit vorgegebenen Bildmustern verglichen und die Vorgabe der Bearbeitungsparameter wird auf Grundlage des aufgenommenen Bilds durchgeführt. Somit wird die Vorgabe der Bearbeitungsparameter explizit der aufgenommenen d.h. erkannten Bearbeitungsstelle zugeordnet.

Gemäß einer weiteren Ausführungsform der Erfindung (Anspruch 6) ist die Bildaufnahmeeinrichtung nicht am Bearbeitungswerkzeug selbst angebracht, sondern an vorgegebenen Stellen im Bearbeitungsbereich, so dass ein Bild zumindest ein Teil des Bearbeitungsbereichs aufgenommen wird, in dem sich mindestens ein Werkstück befindet. Das heißt, wenn sich beispielsweise das Werkstück mit einer vorgegebenen Geschwindigkeit durch den Bearbeitungsbereich bewegt, kann eine bestimmte Bearbeitungsstelle erkannt werden. Vorzugsweise wird dann zusätzlich erkannt, ob an der identifizierten Bearbeitungsstelle eine Bearbeitung vorgenommen wird, d.h. wenn ein Bearbeitungswerkzeug, welches ebenfalls identifiziert wird, in dem Bereich der Bearbeitungsstelle erkannt wird. Übliche Mustererkennungsverfahren zum Erkennen der Bearbeitungsstelle und des Bearbeitungswerkzeugs können verwendet werden.

Vorzugsweise umfasst die Bildaufnahmeeinrichtung eine Videokamera oder eine Infrarotkamera (Anspruch 7, 8). Um eine Erkennung von Bearbeitungsstellen auch an unzugänglichen und unter Umständen unbeleuchteten Abschnitten vorzunehmen, kann das Bearbeitungswerkzeug (Anspruch 9) vorzugsweise eine Beleuchtungsvorrichtung umfassen, die den Bearbeitungsbereich oder einen Teil davon vor dem Bearbeitungswerkzeug beleuchtet.

Vorzugsweise umfasst die Erkennungseinrichtung (Anspruch 10) eine Bildverarbeitungseinrichtung und einen Bildspeicher, wobei die Bildverarbeitungseinrichtung ein von der Bildaufnahmeeinrichtung aufgenommenes Bildmuster mit in dem Bildspeicher gespeicherten vorgegebenen Bearbeitungsstellen-Bildmustern vergleicht und ein Erkennungssignal über die Erkennung einer vorgegebenen Bearbeitungsstelle an eine Bearbeitungsparameter-Vorgabeeinrichtung ausgibt, wenn eine Übereinstimmung zwischen dem aufgenommenen Bildmuster und einem gespeicherten Bearbeitungsstellen-Bildmuster festgestellt wird. Der Vergleich der Bilddaten im Bildspeicher und der aufgenommenen Bilddaten von der Bildaufnahmeeinrichtung wird vorzugsweise (Anspruch 11) mit Hilfe einer Logik durchgeführt. Um den Vergleichsaufwand zu verringern, ist es vorteilhaft, eine Fuzzy-Logik (Anspruch 12) für den Vergleich zu verwenden.

Zur Erkennung der Bearbeitungsstelle kann die Erkennungseinrichtung (Anspruch 13) auch so ausgeführt werden, dass eine an einer Bearbeitungsstelle angebrachte Sendeeinrichtung ein die Bearbeitungsstelle kennzeichnendes Signal ausgibt und eine Empfangseinrichtung zum Empfang des jeweiligen Signals vorgesehen ist. Vorzugsweise (Anspruch 14) bilden die Sende- und Empfangseinrichtung ein Infrarotsystem.

Gemäß einer weiteren Ausführungsform der Erfindung kann die Erkennungseinrichtung (Anspruch 15) auch dadurch gebildet sein, dass an jeder Bearbeitungsstelle ein Code vorgesehen ist, der von einer Codeleseeinrichtung gelesen wird, so dass die Erkennung auf Grundlage des erfassten Codes durchgeführt wird.

Vorzugsweise wird eine Freigabeeinrichtung (Anspruch 18) vorgesehen, die erst dann die Bearbeitung mit den vorgegebenen Bearbeitungsparametern freischaltet, wenn die Erkennungseinrichtung eine vorgegebene Bearbeitungsstelle erkennt. Auf Grundlage der erkannten Bearbeitungsstellen kann eine Zähleinrichtung (Anspruch 19) zählen, wie oft gemäß einem Arbeitsplan eine Bearbeitungsstelle erkannt und wie oft eine Bearbeitung mit voreingestellten Bearbeitungsparametern an dieser Bearbeitungsstelle ausgeführt worden ist.

Bei dem Bearbeitungswerkzeug kann es sich vorzugsweise um einen Drehschrauber (Anspruch 16) handeln. Vorzugsweise umfasst die Bearbeitungsvorrichtung eine Ist-Bearbeitungsparameter-Erfassungseinrichtung zur Erfassung von Ist-Bearbeitungsparametern und eine Vergleichseinrichtung zum Vergleichen der erfassten Ist-Parameter mit den Soll-Parametern zur Steuerung des Bearbeitungswerkzeugs so, dass bei dem Bearbeitungsvorgang der Ist- mit dem Soll-Parameter in Übereinstimmung gebracht wird.

Gemäß einer weiteren Ausführungsform (Anspruch 25) ist das Bearbeitungswerkzeug mit mindestens einer Markierung versehen und die Erkennungseinrichtung umfasst eine Bildaufnahmeeinrichtung zur Aufnahme eines Bilds des Bearbeitungsbereichs, wobei eine Bildverarbeitungseinrichtung die Lage des Werkzeugs durch Verarbeitung des Bilds der Markierung und des Werkstücks oder zumindest eines Teil des Werkstücks erkennt.

Mittels der vorgegebenen Markierungen kann eine Bildverarbeitungseinrichtung (Anspruch 26) Bewegungsmuster des Bearbeitungswerkzeugs auswerten, um festzustellen, ob eine vorgegebene Anzahl von Bearbeitungsvorgängen an den jeweiligen Bearbeitungsstellen ausgeführt worden ist. Insbesondere kann die Erkennungseinrichtung (Anspruch 29) die Bewegungsgeschwindigkeit des Werkstücks auf Grundlage einer zeitlichen Verfolgung der Positionsänderung von einer oder mehreren Bearbeitungsstellen erfassen.

Wenn das Bearbeitungswerkzeug mit mehreren Markierungen versehen ist (Anspruch 35), dann kann die Bildverarbeitungseinrichtung auch die Winkelorientierung zur Bearbeitungsstelle aufgrund einer Auswertung der Koordinaten beider Markierungen zu den Koordinaten der Bearbeitungsstellen oder zu einem festen Koordinatennetz bestimmen.

Vorzugsweise umfasst das Bearbeitungswerkzeug (Anspruch 31) einen Satz von Bearbeitungseinheiten mit einer vorgegebenen Orientierung. In diesem Fall kann eine Zähleinrichtung der Erkennungseinrichtung das Bearbeitungswerkzeug an einer nachfolgenden Bearbeitungsstelle erst dann freigeben, wenn das Bearbeitungswerkzeug, d.h. die Bearbeitungseinheiten, eine Vielzahl von vorgegebenen relativen Lagen zu der Bearbeitungsstelle, insbesondere eine vorgegebene Anzahl von verschiedenen Winkelorientierungen (Anspruch 31), eingenommen haben.

Vorzugsweise umfasst die Erkennungseinrichtung (Anspruch 34) einen Werkstückspeicher zum Speichern der Werkstückdaten, wobei die Bildverarbeitungseinrichtung der Erkennungseinrichtung die Lage (Koordinaten) eines Referenzkoordinatenpunkts des Werkstückbilds und die Lage der Werkzeugmarkierung in einem zum Bearbeitungsbereich festen Koordinatensystems bestimmt und die relative Lage des Werkzeugs zum Werkstück durch Auswerten der Abstände zwischen den Koordinaten der Markierung und der jeweiligen Bearbeitungsstellen unter Bezugnahme auf die im Werkstückspeicher gespeicherten Werkstückdaten, insbesondere der Daten über die Lage der Bearbeitungsstellen bestimmt. Wenn die Koordinaten der Werkstückmarkierung und diejenigen einer bestimmten Bearbeitungsstelle übereinstimmen oder zumindest in einem Toleranzbereich übereinstimmen, so wird erkannt, dass eine Bearbeitung an der richtigen Stelle ausgeführt wird. Auf Grundlage der Erkennung kann das Werkzeug freigegeben werden und/oder die Soll-Werte vorgegeben werden.

Um die Prozessabsicherung weiter zu erhöhen, umfasst eine Bearbeitungsvorrichtung gemäß einer weiteren Ausführungsform der Erfindung eine Bearbeitungsvorrichtung gemäß dem ersten Aspekt der Erfindung wie voranstehend beschrieben und eine Bearbeitungsvorrichtung gemäß dem zweiten Aspekt der Erfindung wie voranstehend beschrieben. Das heißt, sämtliche Ausführungsformen des ersten Aspekts und sämtliche Ausführungsformen des zweiten Aspekts können gemeinsam verwendet werden. So kann beispielsweise dann, wenn die Erkennungseinrichtungen jeweils als Bildaufnahmeeinrichtungen ausgeführt sind, das Bearbeitungswerkzeug explizit die Bearbeitungsstelle erkennen (erster Aspekt) und gleichzeitig die Bildaufnahmeeinrichtung (des zweiten Aspekts) die relative Lage zwischen Bearbeitungswerkzeug und Bearbeitungsstelle überwachen. Dies ist insbesondere von Vorteil, wenn mehrere Bearbeitungswerkzeuge im Einsatz sind, und ein Bearbeitungswerkzeug gerade an einer unzugänglichen Bearbeitungsstelle arbeitet, während ein anderes an einer Bearbeitungsstelle arbeitet, von der ein Bild aufgenommen werden kann und somit die relative Lage von Bearbeitungswerkzeug und Werkstück bestimmt werden kann.

Weitere vorteilhafte Ausführungsformen und Verbesserungen der Erfindung sind in den Unteransprüchen angegeben. Insbesondere umfasst die Erfindung Ausführungsformen, die sich aus getrennt beanspruchten oder beschriebenen Merkmalen in den Ansprüchen und in der nachfolgenden Beschreibung ergeben. Nachstehend wird die Erfindung anhand ihrer Ausführungsformen unter Bezugnahme auf die beiliegenden Zeichnungen näher erläutert.

### Kurzbeschreibung der Zeichnungen

In den Zeichnungen zeigen:
- Fig. 1a-1e: eine Bearbeitungsvorrichtung mit einer Erkennungseinrichtung zum Erkennen eines Werkzeugs in einem Bearbeitungsbereich gemäß des Standes der Technik;
- Fig. 2: ein Blockschaltbild einer Bearbeitungsvorrichtung gemäß einem ersten Aspekt der Erfindung;
- Fig. 3a, 3b: Ausführungsformen eines Bearbeitungswerkzeugs mit einer Erkennungseinrichtung gemäß dem ersten Aspekt der Erfindung;
- Fig. 3c: eine Ausführungsform der Erkennungseinrichtung gemäß dem ersten Aspekt, wobei die Erkennungseinrichtung im Bearbeitungsbereich angeordnet ist;
- Fig. 4: eine Ausführungsformen der Erkennungseinrichtung mit einer Bildaufnahmeeinrichtung 20a, einem Bildspeicher 22 und einer Bildverarbeitungseinrichtung 21;
- Fig. 5: ein Blockschaltbild einer Bearbeitungsvorrichtung gemäß einem zweiten Aspekt der Erfindung;
- Fig. 6: ein Erklärungsdiagramm zur Funktion der Bearbeitungsvorrichtung gemäß dem zweiten Aspekt der Erfindung gemäß Figur 5;
- Fig. 7: eine Ausführungsform der Erkennungseinrichtung 200, die in Fig. 6 gezeigt ist;
- Fig. 8a, 8b, 8c: Erklärungsdiagramme zur Funktion der Erkennungseinrichtung, wenn die relative Lage von Werkzeug und Werkstück auf Grundlage von Koordinatenberechnungen in einem aufgenommenen Bild ausgeführt wird;
- Fig. 9: ein Diagramm eines Bearbeitungswerkzeugs mit einem Satz von Bearbeitungseinheiten; und
- Fig. 10: ein von der Erkennungseinrichtung aufgenommenes Bewegungsmuster.

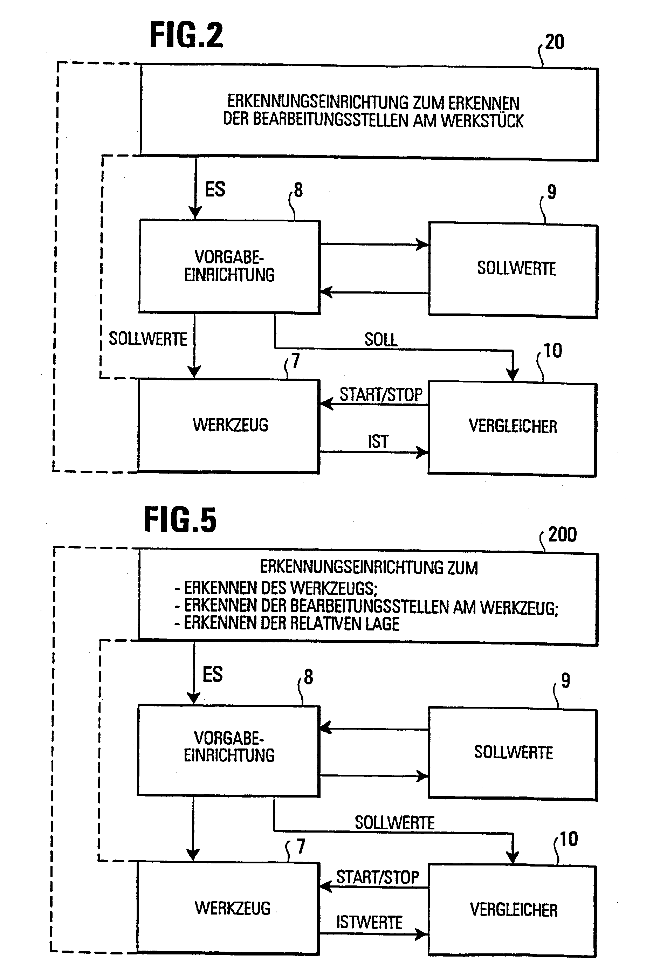

In den Zeichnungen bezeichnen die gleichen oder ähnlichen Bezugszeichen die gleichen oder ähnlichen Teile. Nachstehend werden Ausführungsformen der Erfindung unter Bezugnahme auf die Zeichnungen beschrieben, wobei zunächst ein erster Aspekt der Erfindung unter Bezugnahme auf die Figuren 2-4 erläutert wird.

### Erster Aspekt der Erfindung

Fig. 2 zeigt ein Blockschaltbild einer Bearbeitungsvorrichtung zur Bearbeitung eines Werkstücks mit einer erfindungsgemäßen Erkennungseinrichtung 20. Diese Bearbeitungsvorrichtung ist zur Bearbeitung eines Werkstücks 5, das sich in einem vorgegebenen Bearbeitungsbereich 1 befindet, an einer Vielzahl von Bearbeitungsstellen 4 vorgesehen, wie in Fig. 1a prinzipiell angedeutet. Die Bearbeitungsvorrichtung umfasst mindestens ein Bearbeitungswerkzeug 7 zur Bearbeitung des Werkstücks 5 an den jeweiligen Bearbeitungsstellen 4 und eine Erkennungseinrichtung 20. Die Erkennungseinrichtung 20 ist dafür ausgelegt, um die jeweiligen Bearbeitungsstellen 4 am Werkstück zu erkennen. Wenn die Erkennungseinrichtung 20 eine Bearbeitungsstelle 4 erkennt, gibt sie ein Erkennungssignal ES an eine Bearbeitungsparameter-Vorgabeeinrichtung 8 aus. Das Erkennungssignal ES zeigt an, ob eine Bearbeitungsstelle und/oder welche Bearbeitungsstelle erkannt worden ist. Auf Grundlage dieser Information in dem Erkennungssignal ES liest die Bearbeitungsparameter-Vorgabeeinrichtung 8 Bearbeitungsparameter-Sollwerte aus einer Speichereinrichtung 9 und gibt diese an das Bearbeitungswerkzeug 7 aus. Während der Bearbeitung vergleicht eine Vergleichseinrichtung 10 die Ist-Bearbeitungsparameter mit den Soll-Bearbeitungsparametern. Wenn die Ist- mit den Soll-Werten übereinstimmen, dann stoppt die Vergleichseinrichtung 10 beispielsweise das Bearbeitungswerkzeug 7.

Wie mit den gestrichelten Linien in Fig. 2 angedeutet, kann die Erkennungseinrichtung 20 Teil des Bearbeitungswerkzeugs 7 selbst sein, aus Teilen des Bearbeitungswerkzeugs 7 und einer getrennten Einrichtung 20 oder aus einer völlig getrennten Erkennungseinrichtung 20 gebildet sein, wie nachstehend noch anhand der Ausführungsformen erläutert wird.

Die in Fig. 2 gezeigte Bearbeitungsvorrichtung arbeitet derart, dass in Abhängigkeit von dem Signal ES jeweils vorgegebene Bearbeitungsparameter aus der Speichereinrichtung 9 ausgelesen und dann das Bearbeitungswerkzeug 7 (oder mehrere Bearbeitungswerkzeuge 7, wenn mehrere Bearbeitungsstellen erkannt werden) eine Bearbeitung an den jeweiligen Bearbeitungsstellen vornimmt. Erfindungsgemäß wird also die Bearbeitung in Abhängigkeit von der Erkennung der tatsächlichen Bearbeitungsstellen durchgeführt und nicht in Abhängigkeit von dem Aufenthaltsort eines Bearbeitungswerkzeugs im Bearbeitungsbereich 1 oder in unterteilten Raumbereichen 6, 6a, 6b des Bearbeitungsbereichs 1 wie in der voranstehend erläuterten Fig. 1 des Standes der Technik.

Ein Beispiel soll die Funktion erläutern. Es sei angenommen, dass es sich bei dem Werkstück 4 um ein Kraftfahrzeug oder ein Teil eines Kraftfahrzeuges (beispielsweise eine Kraftfahrzeugkarosserie, wie oben erläutert) handelt, wobei in diesem Fall die Bearbeitungsstellen 4 vorgegebene Montagestellen an dem Kraftfahrzeug oder an dem Teil sind, der Bearbeitungsbereich 1 vorgegebener Bereich einer Montagestraße ist und die Bearbeitung die Montage von Montageteilen an den vorgegebenen Montagestellen betrifft. Die Montage kann beispielsweise eine Befestigung eines vormontierten Motors im Motorraum der Karosserie sein. Der Motorblock wird beispielsweise von oben und unten mit Schrauben an der Karosserie befestigt, wobei auch andere Montagestellen zu diesen Schraubverbindungen benachbart angeordnet sein können, möglicherweise sogar mit der gleichen Schraubengröße. Unabhängig davon, ob sich die Karosserie entlang der Montagestraße bewegt oder tatsächlich stationär ist, d.h. insbesondere unabhängig davon, wo sich ein Bearbeitungswerkzeug im Montagebereich befindet, erkennt die erfindungsgemäße Erkennungseinrichtung 20 die (unter Umständen auch schwer zugänglichen) Montagestellen. Somit kann immer sichergestellt werden, dass die Bedienungsperson mit dem Bearbeitungswerkzeug, beispielsweise einem automatischen Drehschrauber, an der richtigen Stelle schraubt. Unabhängig davon, in welcher Reihefolge nun die Bedienungsperson die Verschraubung an den einzelnen Schraubstellen vornimmt, kann die Bearbeitungsvorrichtung bei jedem Schraubvorgang bestimmen, um welche Bearbeitungsstelle es sich handelt und durch Ausgabe des Erkennungssignals ES die zugehörigen Bearbeitungsparameter (z.B. Drehmoment und/oder Drehwinkel) vorgeben. Es wird somit verhindert, dass die Bedienungsperson an irgendeiner Bearbeitungsstelle mit falschen Bearbeitungsparametern und/oder an falschen Bearbeitungsstellen geschraubt wird.

Wie ersichtlich ist, wird durch die Erkennung der Bearbeitungsstellen eine Zuordnung der Bearbeitungsparameter zu dem jeweiligen Bearbeitungswerkzeug und zu den jeweils richtigen Bearbeitungsparametern (den vorgegebenen Parametern und den Ist-Parametern, die während der Bearbeitung gemessen werden) vorgenommen, im Gegensatz zum Stand der Technik, bei dem lediglich ein allgemeiner Aufenthaltsort des Werkzeugs im Bearbeitungsbereich erfolgt.

Nachstehend werden Ausführungsformen der Erkennungseinrichtung beschrieben, mit denen die jeweiligen Bearbeitungsstellen am Werkstück 5 erkannt werden können.

Die Erkennungseinrichtung 20 kann eine Bildaufnahmeeinrichtung zur Aufnahme eines Bildes wenigstens eines Abschnitts des Werkstücks 5, in dem sich wenigstens eine Bearbeitungsstelle 4 befindet, umfassen. Bei der Bildaufnahmeeinrichtung kann es sich um eine Kamera handeln, insbesondere ein Videokamera oder eine Infrarotkamera. Insbesondere dann, wenn sich die Werkstücke (z.B. Fahrzeugteile) bewegen, ist der Einsatz einer Videokamera von Vorteil. Wenn das Werkstück 5 stationär ist, dann eignet sich auch der Einsatz einer Standbildkamera.

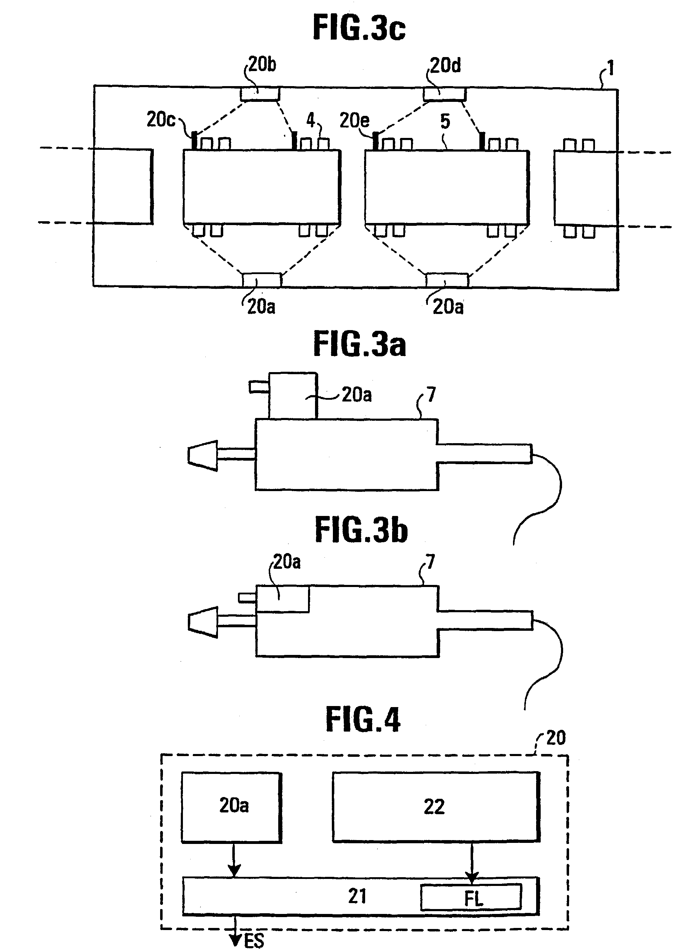

Verschiedene Anordnungen der Bildaufnahmeeinrichtung der Erkennungseinrichtung sind möglich. Wie in Fig. 3a gezeigt, kann die Bildaufnahmeeinrichtung 20a (möglicherweise zusammen mit anderen Verarbeitungseinheiten der Erkennungseinrichtung 20) auf das Bearbeitungswerkzeug 7 selbst aufgesetzt (z.B. mittels eines Halters) oder integral in dem Bearbeitungswerkzeug 7 (d.h. in seinem Gehäuse) angeordnet sein, wie in Fig. 3b gezeigt. In Fig. 3a, 3b ist als Beispiel ein Bearbeitungswerkzeug in Form eines Schraubwerkzeugs dargestellt, jedoch kann es sich um irgendwelche anderen Bearbeitungswerkzeuge, z.B. Schleifwerkzeuge, Drehwerkzeuge etc. je nach dem am Werkstück vorzunehmenden Bearbeitungsvorgang handeln. Der Einsatz einer auf dem Werkzeug oder integral im Werkzeug angeordneten Bildaufnahmeeinrichtung ist insbesondere dann vorteilhaft, wenn Bearbeitungen an relativ unzugänglichen Stellen am Werkstück vorgenommen werden müssen. Das heißt, die Bildaufnahmeeinrichtung dient als eine Art "Zielfernrohr", mit dem eine jeweilige Bearbeitungsstelle von der Bedienungsperson "angepeilt" wird und auf Grundlage der aufgenommenen Bilddaten wird die Erkennung der Bearbeitungsstelle vorgenommen. Selbst, wenn sich die Bedienungsperson mit dem Bearbeitungswerkzeug an unzugängliche Stellen, beispielsweise von unten bei einer Motorblockbefestigung, begeben muss, wird dennoch unabhängig vom Aufenthaltsort und von der Winkelorientierung des Bearbeitungswerkzeugs zur Bearbeitungsstelle ein Bild aufgenommen, welches dann weiterverarbeitet wird, wie nachstehend noch erläutert wird. Um den vor dem Bearbeitungswerkzeug 7 liegenden Teil des Werkstücks beispielsweise an verdeckten Stellen zu erhellen, kann das Bearbeitungswerkzeug 7 ferner eine Beleuchtungsvorrichtung umfassen, die den vor dem Bearbeitungswerkzeug liegenden Bereich ausleuchtet. Somit können gute Bilder von der Bildaufnahmeeinrichtung ermittelt werden. Wenn die Bildverarbeitungseinrichtung eine Videokamera bzw. eine Infrarotkamera ist, kann es sich bei der Beleuchtungsvorrichtung um eine normale Lampe bzw. eine Infrarotbeleuchtung handeln.

Die Datenübertragung von der Bildaufnahmeeinrichtung an eine getrennt vorgesehene Bildverarbeitungseinrichtung kann über Funk oder über ein getrenntes Kabel erfolgen. Es ist auch möglich die Signale auf das bereits zur Steuerung des Werkzeugs vorhandene Steuerkabel zu multiplexieren. Besonders vorteilhaft ist die Verwendung von optischen Fasern für die Bildübertragung.

Fig. 3c zeigt eine andere Ausführungsform der Erkennungseinrichtung 20, bei der eine oder mehrere Bildaufnahmeeinrichtungen 20a in dem Bearbeitungsbereich 1 an vorgegebenen Stellen angeordnet ist/sind. Wie in Fig. 3a gezeigt, wird ein Bild zumindest eines Teils des Bearbeitungsbereichs 1 aufgenommen, in dem sich mindestens ein Werkstück 5 befindet. Fig. 3c zeigt als Beispiel mehrere in einer Montagestraße angeordnete Werkstücke 5, wobei jedem Werkstück 5 eine Bildaufnahmeeinrichtung zugeordnet ist. Somit können die Bearbeitungsstellen auch erkannt werden, wenn die Bildaufnahmeeinrichtung 20a nicht auf dem Bearbeitungswerkzeug 7 angebracht ist, wie in Fig. 3a, 3b gezeigt.

Fig. 4 zeigt eine Ausführungsform der Erkennungseinrichtung 20 mit einer Bildverarbeitungseinrichtung 21 und einem Bildspeicher 22. Unabhängig davon, ob die Bildaufnahmeeinrichtung 20a auf das Gehäuse des Bearbeitungswerkzeugs 7 aufgesetzt ist, in das Gehäuse des Bearbeitungswerkzeugs 7 integriert ist oder getrennt im Bearbeitungsbereich 1 vorgesehen ist, vergleicht die Bildverarbeitungseinrichtung 21 ein von der Bildaufnahmeeinrichtung 20a aufgenommenes Bildmuster mit in dem Bildspeicher 22 gespeicherten, vorgegebenen Bearbeitungsstellen-Bildmustern und gibt das Erkennungssignal ES über die Erkennung einer vorgegebenen Bearbeitungsstelle an die Bearbeitungsparameter-Vorgabeeinrichtung 8 aus, wenn eine Übereinstimmung zwischen dem aufgenommenen Bildmuster und einem gespeicherten Bearbeitungsstellen-Bildmuster festgestellt wird.

Der Vergleich der Bilddaten des aufgenommenen Bildes und der Referenzmuster im Bildspeicher 22 wird mit Hilfe einer Logik FL durchgeführt. Typischerweise wird vor dem Bearbeitungsbeginn mit der Bildaufnahmeeinrichtung ein Lernvorgang durchgeführt, bei dem die jeweiligen Bearbeitungsstellen an einem Muster-Werkstück vorher mehrmals abgetastet werden, um Referenzmuster im Bildspeicher 22 zu speichern. Somit können einen Vielzahl von Bildmustern für eine Vielzahl von Bearbeitungsstellen im Bildspeicher 22 vorab gespeichert werden.

Die Bildvergleiche bei der Bearbeitung können von der Logik FL so ausgeführt werden, dass das jeweils bei der Bearbeitung aufgenommene Bildmuster mit der Vielzahl von gespeicherten Referenzmustern verglichen wird. Vorzugsweise wird dafür eine fuzzy-Logik verwendet. Derartige Bildvergleiche mit Hilfe einer fuzzy-Logik sind Stand der Technik und eine weitere Erläuterung dafür erübrigt sich hier.

In jedem Fall kann auf Grundlage des aufgenommenen Bildes ein Erkennungssignal ES an die Bearbeitungsparameter-Vorgabeeinrichtung 8 ausgegeben werden, das in eindeutiger Weise anzeigt, um welche Bearbeitungsstelle es sich handelt.

Die Bildverarbeitungseinrichtung, die Bildaufnahmeeinrichtung und der Bildspeicher können auch zusammen in dem oder auf dem Werkzeug integriert werden, so dass lediglich das Erkennungssignal an eine zentrale Steuereinheit des Werkzeugs übertragen werden muss.
Die Bearbeitungsvorrichtung kann eine Freigabeeinrichtung umfassen, die eine Bearbeitung mit dem Bearbeitungswerkzeug 7 mit den jeweiligen vorgegebenen Bearbeitungsparametern nur dann freischaltet, wenn die Erkennungseinrichtung 20 ein entsprechendes Erkennungssignal über eine entsprechende Bearbeitungsstelle 4 ausgibt. Das heißt, die Bedienungsperson "peilt" mit der Bildaufnahmeeinrichtung 20a so lange eine beabsichtigte Bearbeitungsstelle an, bis die Freigabeeinrichtung das Bearbeitungswerkzeug mit den vorgegebenen Bearbeitungsparametern freischaltet. Somit kann in einzigartiger Weise sichergestellt werden, dass das Bearbeitungswerkzeug an eine richtige Bearbeitungsstelle geführt worden ist, die dann zudem mit den richtigen dafür vorgesehenen Bearbeitungsparametern bearbeitet wird.

Wie eingangs erläutert, wird der Bedienungsperson des Bearbeitungswerkzeugs normalerweise ein Arbeitsplan vorgegeben, so dass eine vorgegebene Anzahl von Bearbeitungswerkzeugen zunächst z.B. mit einer M10-Stecknuß und dann mit einer M15-Stecknuß nacheinander ausgeführt werden sollen. Mit der erfindungsgemäßen Bildaufnahmeeinrichtung kann in Kombination mit einer Zähleinrichtung auch sichergestellt werden, dass die vorgegebene Anzahl von Bearbeitungsvorgängen an den richtigen Bearbeitungsstellen ausgeführt worden ist, d.h. es kann vermieden werden, dass eine Bedienungsperson zweimal an der gleichen Stelle schraubt, wobei eine andere Bearbeitungsstelle überhaupt nicht bearbeitet wird. Das heißt, auf Grundlage der Erkennung der Bearbeitungsstelle kann die Erkennungseinrichtung bestimmen, dass an einer bestimmten Bearbeitungsstelle bereits ein Bearbeitungsvorgang erfolgreich durchgeführt worden ist, wobei nur dann die Zähleinrichtung den Bearbeitungsvorgang (bestehend z.B. aus mehreren einzelnen Schraubvorgängen) als abgeschlossen betrachtet und weiterzählt. Wenn die Bedienungsperson versucht, die bereits abgearbeitete Bearbeitungsstelle erneut zu bearbeiten, dann wird die Zähleinrichtung nicht nochmals weiterzählen und vorzugsweise wird die Freigabeeinrichtung das Bearbeitungswerkzeug an dieser Bearbeitungsstelle nicht nochmals freigeben.

Obwohl es sich bei der in den Figuren 3a, 3b, 4 dargestellten Ausführungsform um die gegenwärtig angesehene beste Vorgehensweise zur Ausführung der Erfindung handelt, sind auch andere Ausführungsformen der Erkennungseinrichtung denkbar.

Wie in Fig. 3c gezeigt, kann die Erkennungseinrichtung 20 auch eine an einer jeweiligen Bearbeitungsstelle 4 des Werkstücks 5 angebrachte Sendeeinrichtung 20c, die ein die Bearbeitungsstelle 4 kennzeichnendes Signal ausgibt und eine Empfangseinrichtung 20b zum Empfangen des jeweiligen Signals umfassen. Auch damit wird eine einzigartige Zuordnung der Bearbeitungsparameter möglich. Die Sende- und Empfangseinrichtung kann ein Infrarotsystem umfassen. Die Erkennungseinrichtung 20 kann auch einen an einer jeweiligen Bearbeitungsstelle 4 des Werkstücks angebrachten Code 20e umfassen, der die jeweiligen Bearbeitungsstelle kennzeichnet, wobei eine Code-Leseeinrichtung 20d zum Lesen des jeweiligen Codes 20e vorgesehen ist und die Erkennungseinrichtung 20 die jeweilige Bearbeitungsstelle auf Grundlage des gelesenen Codes erkennt. In vorteilhafter Weise kann es sich bei dem an der Bearbeitungsstelle 4 angebrachten Code 20e um einen Bearbeitungs-Strichcode handeln. Insbesondere kann die Empfangseinrichtung 20b oder die Code-Leseeinrichtung 20d auf oder in dem Bearbeitungswerkzeug 7 angeordnet werden, ähnlich wie bei den Ausführungsformen in Fig. 3a, 3b.

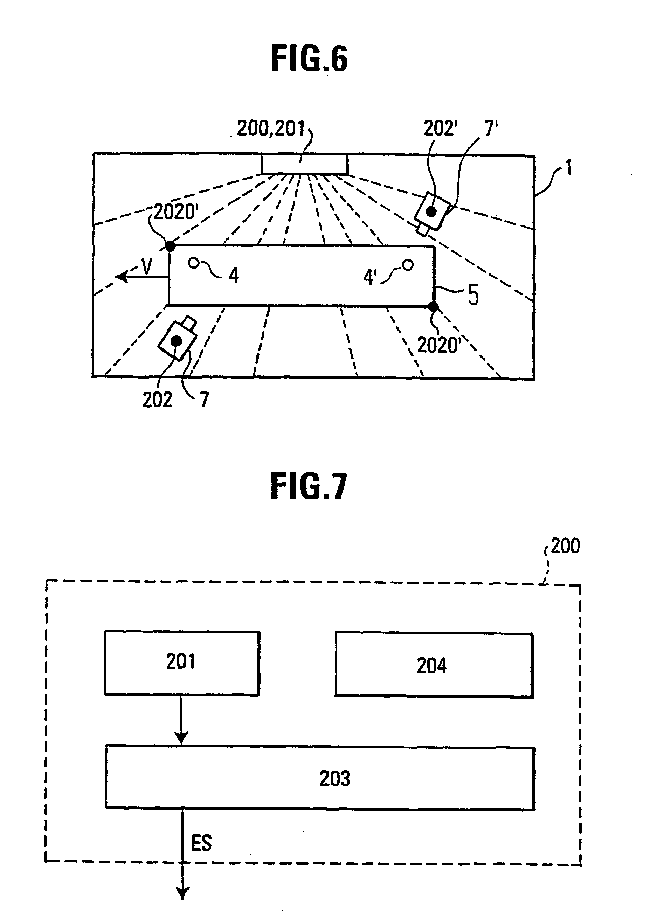

Ausführungsformen der Erkennungseinrichtung 20a, 20b, 20d, wenn sie im Bearbeitungsbereich 1 angeordnet sind, werden nachstehend unter Bezugnahme auf den zweiten Aspekt der Erfindung in Fig. 5 näher erläutert.

### Zweiter Aspekt der Erfindung

Fig. 5 zeigt ein Blockschaltbild einer Bearbeitungsvorrichtung der Bearbeitung eines Werkstücks gemäß einem zweiten Aspekt der Erfindung. Fig. 6 zeigt eine Ansicht ähnlich wie Fig. 3c im Zusammenhang mit dem zweiten Aspekt der Erfindung.

Wie in Fig. 6 gezeigt, ist auch bei dem zweiten Aspekt der Erfindung ein Werkstück 5 in einem vorgegebenen Bearbeitungsbereich 1 angeordnet und wird an einer Vielzahl von Bearbeitungsstellen 4, 4' mit vorgegebenen Bearbeitungsparametern durch mindestens ein Bearbeitungswerkzeug 7, 7' bearbeitet. Eine Erkennungseinrichtung 200 ist vorgesehen, um die Lage und/oder Winkelorientierung des Bearbeitungswerkzeugs 7, 7' im Bearbeitungsbereich 1 zu erkennen, die Lage des Werkstücks 7 im Bearbeitungsbereich 1 zu erkennen, und daraus die relative Lage des Bearbeitungswerkzeugs 7 zu der jeweiligen Bearbeitungsstelle 4 zu bestimmen. Wenn eine vorgegebene relative Lage zwischen Werkstück (und/oder einer bestimmten Bearbeitungsstelle des Werkstücks) und Werkzeug ermittelt worden ist, gibt die Erkennungseinrichtung 200 das Erkennungssignal ES an die Bearbeitungsparameter-Vorgabeeinrichtung 8 aus, die genau wie in Fig. 2 die jeweiligen Sollwerte aus der Speichereinrichtung 9 ausliest und an die jeweiligen Werkzeuge 7, 7' und an die Vergleichseinrichtung 10 ausgibt. Während der Bearbeitung vergleicht die Vergleichseinrichtung 10 die Ist- mit den Sollwerten und steuert das Bearbeitungswerkzeug 7 in gleicher Weise wie in Fig. 2.

Genau wie in Fig. 2 zeigt die gestrichelte Linie in Fig. 5 an, dass die Erkennungseinrichtung 200 teilweise aus einer getrennten Einrichtung 200 sowie aus Teilen des Werkzeugs 7 selbst besteht, wie nachstehend noch erläutert wird.

Ein Beispiel soll die Funktion der Erkennungseinrichtung des zweiten Aspekts erläutern. Wie bereits eingangs erwähnt, besteht die Notwendigkeit, dass eine Bedienungsperson beispielsweise an einer Kraftfahrzeugkarosserie zunächst im Frontbereich eine vorgegebene Anzahl von Bearbeitungsvorgängen ausführt und sich dann zum hinteren Bereich bewegt und dort eine vorgegebene Anzahl von Bearbeitungsvorgängen ausführt. Es ist dabei nicht unbedingt erforderlich, zu erkennen, ob das jeweilige Bearbeitungswerkzeug 7, 7' tatsächlich in Kontakt mit den Bearbeitungsstellen 4, 4' getreten ist, sondern es ist ausreichend zu bestimmen, dass sich beispielsweise das Bearbeitungswerkzeug 7 in Fig. 6 "in der Umgebung des vorderen Teils des Werkstücks mit der Bearbeitungsstelle 4" und das Bearbeitungswerkzeug 7' "im hinteren Bereich des Werkstücks 5 mit der Bearbeitungsstelle 4'" befindet. Über die Erkennung der Lage des Werkzeugs 7 im Bearbeitungsbereich 1 und über die Erkennung der Lage des Werkstücks 5 im Bearbeitungsbereich 1 lässt sich dann, wenn prinzipiell die Bearbeitungsstellen d.h. die Koordinaten der Bearbeitungsstellen im Werkstück bekannt sind, immer eine relative Lagebeziehung zwischen dem Werkstück und dem Werkzeug bestimmen.

Vorzugsweise wird nicht explizit die Bearbeitungsstelle 4,4' erkannt, sondern es reicht aus, zu bestimmen, ob sich ein Bearbeitungswerkzeug 7 in einer bestimmten Umgebung der Bearbeitungsstellen 4, 4' befindet. In diesem Zusammenhang sei insbesondere nochmals darauf hingewiesen, dass in der Serienfertigung das Werkstück 5 sich mit einer vorgegebenen Geschwindigkeit v durch den Bearbeitungsbereich 1 bewegt, so dass über eine kontinuierlich ausgeführte Lagebestimmung festgestellt werden kann, in welchem Bereich des Werkstücks 5 sich die jeweiligen Bearbeitungswerkzeuge 7, 7' befinden. Es wird also auch hier wie beim ersten Aspekt der Erfindung eine Beziehung zwischen dem jeweiligen Werkstück 5 und dem jeweiligen Bearbeitungswerkzeug 7 hergestellt.

Im Gegensatz dazu kann der in Fig. 1b erläuterte Stand der Technik keine relativen Beziehungen zwischen Werkstück und Bearbeitungswerkzeug ermitteln, insbesondere dann nicht, wenn sich das Werkstück 5 mit einer Geschwindigkeit transversal im Bearbeitungsbereich 1 bewegt, da lediglich eine Erkennung des Werkzeugs in den jeweiligen unterteilten Raumbereichen 6a, 6b erfasst wird, wobei dies völlig unabhängig von der Lage des Werkstücks 5 ist.

Nachstehend werden Ausführungsformen der Erkennungseinrichtung zur Bestimmung der relativen Lage beschrieben. Wie in Fig. 6 gezeigt, kann die Erkennungseinrichtung mindestens eine Markierung 202, die an dem mindestens einen Bearbeitungswerkzeug 7, 7' angebracht ist, eine in Fig. 5 gezeigte Bildaufnahmeeinrichtung 201 zur Aufnahme eines Bildes des Bearbeitungsbereichs 1 und eine Bildverarbeitungseinrichtung 203 zum Erkennen der Lage des Bearbeitungswerkzeugs 7 unter Ausgabe des Erkennungssignals ES umfassen, wie in Fig. 7 gezeigt. In dem von der Bildaufnahme 201 aufgenommenen Bild des Bearbeitungsbereichs 1 (oder zumindest eines Teilbereichs, in dem sich das Werkstück 5 und das Bearbeitungswerkzeug befindet) führt die Bildverarbeitungseinrichtung 203 eine einfache Erkennung der Lage des Bearbeitungswerkzeugs 7 durch Auswertung der Lage der Markierung 202, 202' aus. Das heißt, die Bildverarbeitungseinrichtung muss nicht explizit eine Mustererkennung der jeweiligen Bearbeitungswerkzeuge ausführen, sondern es ist ausreichend, lediglich ein charakteristisches Merkmal wie beispielsweise die Markierung 202 hinsichtlich der Lage im Bearbeitungsbereich 1 auszuwerten. Es ist nur wichtig, dass die Lage, d.h. die Position des Bearbeitungswerkzeug (und möglicherweise die Orientierung des Bearbeitungswerkzeugs, wie nachstehend noch erläutert) erfasst wird, um die relative Beziehung zum dem Werkstück herzustellen.

Die Lage des Werkstücks im Bearbeitungsbereich kann entweder durch eine vollständige Mustererkennung eines Werkstücks durch Vergleich (z.B. fuzzy-Logik wie voranstehend beschrieben) mit vorgegebenen Referenz-Werkstück-Bildmustern in einer Bildmuster-Speichereinrichtung 204 erfolgen oder kann in ähnlicher Weise wie die Lageerkennung des Bearbeitungswerkzeugs 7 vorgenommen werden. Das heißt, die Bildverarbeitungseinrichtung 203 kann das Bild des Werkstücks 5 verarbeiten und mit vorgegebenen Werkstück-Bilddaten vergleichen, und zwar in der gleichen Weise wie bei dem Bildvergleich in der Fig. 4.

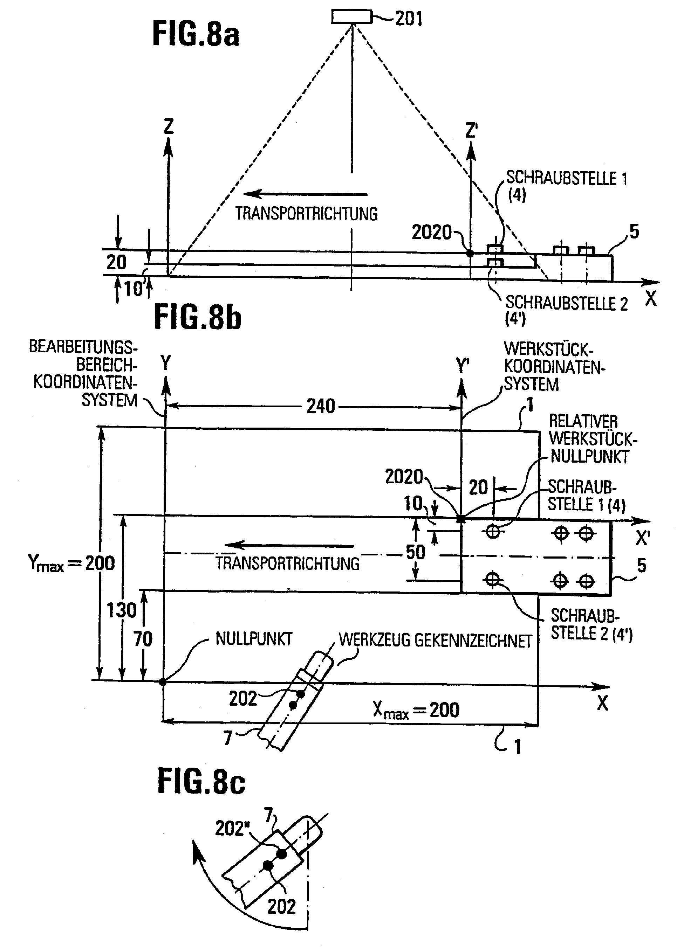

Die Bildverarbeitungseinrichtung 203 muss aber nicht zwingend das gesamte Werkstück 5 (bzw. seine relative Lage im Bearbeitungsbereich 1) erkennen, sondern es ist durchaus ausreichend, wenn die Bildverarbeitungseinrichtung 203 beispielsweise einen vorderen Abschnitt des Werkstücks 5 beim Eintritt in den Bearbeitungsbereich 1 erfasst, wie schematisch in Fig. 8b gezeigt. Sobald also die Lage eines charakteristischen Merkmals des Werkstücks (z.B. ein vorgegebenes Muster oder ein Referenzpunkt) im Bearbeitungsbereich 1 erkannt worden ist, kann jeder Abschnitt des Werkstücks, insbesondere die Bearbeitungsstellen des Werkstücks, einfach auf Grundlage von vorab gespeicherten Werkstückdaten (d.h. Anordnung der Bearbeitungsstellen) in der Speichereinrichtung 204 bestimmt werden.

Wenn beispielsweise angenommen wird, dass sich das Werkstück 5 immer geradlinig durch den Bearbeitungsbereich in einer Transportrichtung bewegt, wie in Fig. 8b gezeigt, so kann es durchaus ausreichend sein, einen charakteristischen Abschnitt des Werkstücks, beispielsweise eine Ecke zu erkennen und diesen Abschnitt bei der Bewegung weiterzuverfolgen. Wenn ein gewisser Bereich an der Ecke 2020 in Fig. 6 erfasst wird, dann kann allein durch Auswerten dieses Bereiches die Lage des Werkstücks im Bearbeitungsbereich (und daraus die Lage der Bearbeitungsstellen) bestimmt werden. Es können auch zwei Bereiche 2020, 2020' des Werkstücks erkannt werden und daraus die Lage des Werkstücks im Bearbeitungsbereich 1 bestimmt werden. Wenn sämtliche Werkstückdaten im Speicher 204 gespeichert sind, so ist es unter Umständen völlig ausreichend, das Werkstück an jeweils bekannten Werkstückabschnitten mit einer oder zwei Markierungen 2020, 2020' ähnlich wie die Markierung 202 beim Werkzeug 7 zu versehen und daraus die Lage des Werkstücks zu bestimmen.

Sobald die Lage, d.h. die Position im Bearbeitungsbereich, des Bearbeitungswerkzeugs 7, 7' und die Lage des Werkstücks auf Grundlage des erkannten Abschnitts oder auf Grundlage der Markierung 2020 erkannt worden ist, können aufgrund der bekannten Werkstückdaten (insbesondere aufgrund der bekannten Lage der Bearbeitungsstellen 4) relative Lagebeziehungen zwischen Werkstück und Werkzeug bestimmt werden, beispielsweise die absoluten Abstände zwischen Bearbeitungswerkzeug und Bearbeitungsstelle.

Fig. 8a (Seitenansicht) und Fig. 8b (Draufsicht) zeigen eine Ausführungsform des zweiten Aspekts der Erfindung, bei der eine Bildaufnahmeeinrichtung 201 in Form einer Kamera oder Infrarotkamera von oben den Bearbeitungsbereich 1, insbesondere das Werkzeug 7 und das Werkstück 5, abtastet. Es kann gleichzeitig eine weitere Kamera 201 vorgesehen werden, um das Werkstück 5 auch seitlich abzutasten, falls dort weitere Bearbeitungsstellen vorhanden sind, um eine dreidimensionale Lagebestimmung des Werkzeugs bezüglich des Werkstücks durchzuführen. In der Bildverarbeitungseinrichtung ist dem überwachten Bearbeitungsbereich ein festes Koordinatensystem X, Y, Z zugeordnet. Sobald nun die Bildverarbeitungseinrichtung den Abschnitt 2020 (z.B. ein charakteristisches Teil oder eine Referenzmarkierung) des Werkstücks 5 beim Eintritt in den Bearbeitungsbereich 1 (d.h. in den Koordinatenbereich Xmax=300; Ymax=200, der dem Bereich 1 zugeordnet ist) erkannt hat, können - für einen festen Zeitpunkt - die relativen Lagen (Koordinaten) der Schraubstellen 1, 2 aufgrund der bekannten im Speicher 204 gespeicherten Werkstückdaten bestimmt werden. In dem aufgenommenen Bild des Bearbeitungsbereichs 1 ist das Koordinatensystem X, Y, Z angeordnet, wobei z.B. bezüglich des Nullpunktes X=0; Y=0 die relativen Lagen der Schraubstellen 1, 2 ermittelt werden.

Wenn der erkannte Abschnitt des Werkstücks eine Referenzmarkierung ist, dann wird diese als Werkstück-Nullpunkt des Werkstück-Koordinatensystems x', y', z' verwendet. Wenn ein ganzer Abschnitt des Werkstücks z.B. durch eine Mustererkennung erkannt wird, dann wird eine vorgegebene Stelle in dem Abschnitt als Werkstück-Nullpunkt verwendet.

Wenn z.B. der relative Werkstück-Nullpunkt 2020 des Werkstück-Koordinatensystems x', y' eine Lage x = 240, y = 130 im Bearbeitungsbereich-Koordinatensystem besitzt und die Schraubstellen 1, 2 bezüglich dieses relativen Werkstück-Nullpunktes 2020 die Koordinaten x = 20, y = -10, z = 0 (Schraubstelle 1) und x = 20, y = -50, z = -10 (Schraubstelle 2) aufweisen, so kann auch die absolute Lage der Schraubstellen 1, 2 im Koordinatensystem X, Y, Z bestimmt werden.

Genauso kann die Lage des Bearbeitungswerkzeugs 7 aufgrund der Lage der erkannten Markierung 202 im Koordinatensystem X, Y, Z fortlaufend berechnet werden. Wenn die Koordinaten des relativen Werkstück-Nullpunktes 2020 und möglicherweise der Schraubstellen (die bezüglich des Werkstück-Nullpunkts im Speicher abgelegt sind) bekannt sind und fortlaufend berechnet werden und gleichzeitig die Lage des Bearbeitungswerkzeugs 7 aufgrund der Koordinatenbestimmung der Markierung 202 im Koordinatensystem X, Y, Z ausgewertet wird, können immer relative Lagebeziehungen zwischen dem Werkzeug (d.h. der Markierung 202) und dem Werkstück und insbesondere den Schraubstellen 1, 2 (4, 4') berechnet werden.

Wenn das Werkzeug 7, wie in Fig. 8c gezeigt, mit zwei Markierungen 202, 202'' versehen ist, kann zusätzlich zur relativen Lagepositionsbestimmung, die Winkelorientierung des Werkstücks 7 zum Werkstück 5 bzw. Zu einer jeweiligen Bearbeitungsstelle 4, 4' des Werkstücks 5 bestimmt werden. In diesem Fall verarbeitet die Bildverarbeitungseinrichtung 201 zwei Markierungen 202, 202'', wobei die Koordinaten beider Markierungen 202, 202'' in dem aufgenommenen Bild fortlaufend berechnet werden und daraus der Winkel im Koordinatensystem X, Y, Z und damit der Winkel zum Werkstück bzw. zu den Bearbeitungsstellen berechnet wird.

Durch die Bewegung des Werkstücks durch den Bearbeitungsbereich 1 werden somit auf Grundlage des aufgenommenen Bildes des Bearbeitungsbereichs 1 die Koordinaten der Schraubstellen sowie die Koordinaten der Markierungen des Bearbeitungswerkzeugs fortlaufend berechnet, so dass auf Grundlage dieser Koordinaten z.B. immer ein absoluter Abstand zwischen den Schraubstellen und dem Bearbeitungswerkzeug im Bearbeitungsbereich-Koordinatensystem X, Y, Z ermittelt werden kann, so dass damit sichergestellt wird, dass an einer richtigen Schraubstelle geschraubt wird.

Die fortlaufende Berechnung der Lagen ist insbesondere auch in der Serienfertigung von Vorteil, da dann ein neues Werkstück 5 bereits den Bearbeitungsbereich 1 betritt, wenn ein vorangehendes Werkstück 5 diesen verlässt. Sobald das vorherige Werkstück 5 in den Bearbeitungsbereich 1 eingetreten ist und die jeweiligen Koordinaten berechnet werden, werden sämtliche Freigaben und Bearbeitungsparameter-Einstellungen nur bezüglich dieses erkannten Werkstücks 5 ausgeführt, so dass damit sichergestellt wird, dass die Bedienungsperson nicht bereits an dem nachfolgenden Werkstück 5 eine Bearbeitung beginnt.

Eine Freigabe des Werkzeugs kann z.B. erst dann erfolgen, wenn der Abstand zwischen Werkzeug und Bearbeitungsstelle einen vorgegebenen Wert annimmt, oder erst dann, wenn die Koordinaten von Werkzeug und von bestimmten Bearbeitungsstellen (die zeitlich aktualisiert wird) übereinstimmen.

Natürlich kann eine Bildaufnahmeeinrichtung 201, die das Werkstück 5 von oben betrachtet und eine Bildverarbeitungseinrichtung, die das Werkstück seitlich betrachtet, kombiniert werden, um auch eine dreidimensionale Auflösung bei der relativen Lagebestimmung zu ermöglichen.

Die Z-Koordinaten des Werkstück-Nullpunkts und damit des Werkstücks (und dessen Bearbeitungsstellen) und der Werkzeugmarkierung(en) und damit des Bearbeitungswerkzeugs können aber auch durch Auswertung des Fokussierungsgrads mit einer auf das Werkstück nur von oben gerichteten Kamera ermittelt werden. Wenn die Kamera z.B. auf z'=0 fokussiert ist, dann wird die Schraubstellen 1 (4) bei z'=0 fokussiert sein und die Schraubstelle bei z'=-10 wird in einem definierten Maße defokussiert sein. Diese Z' Koordinaten können dann in die Z Koordinaten umgerechnet werden, wenn zuvor die Z Lage des Referenz-Nullpunkts des Werkstücks ausgewertet werden ist (in Fig. 8a liegt dieser bei z=+20).

Ferner ist es natürlich möglich, dass die Erkennungseinrichtung, bzw. die Bildverarbeitungseinrichtung explizit das gesamte Werkzeug erkennt, anstelle lediglich einer Lagebestimmung auf Grundlage der Markierung 202. Ferner ist es möglich, dass auch die explizite Koordinate der Lage der Stecknuss auf Grundlage der erfassten Markierung 202 bestimmt wird, um die Lagebestimmung zu verfeinern. Das heißt, wenn bestimmte Bearbeitungswerkzeugabschnitte erkannt werden, kann auf Grundlage von vorab gespeicherten Bearbeitungswerkzeugdaten eine relative Lagebestimmung von vorgegebenen Abschnitten des Bearbeitungswerkzeugs (beispielsweise der Stecknuss) erfolgen.

Auf Grundlage der relativen Lageerkennung, sind eine Vielzahl von weiteren Ausführungsformen möglich.

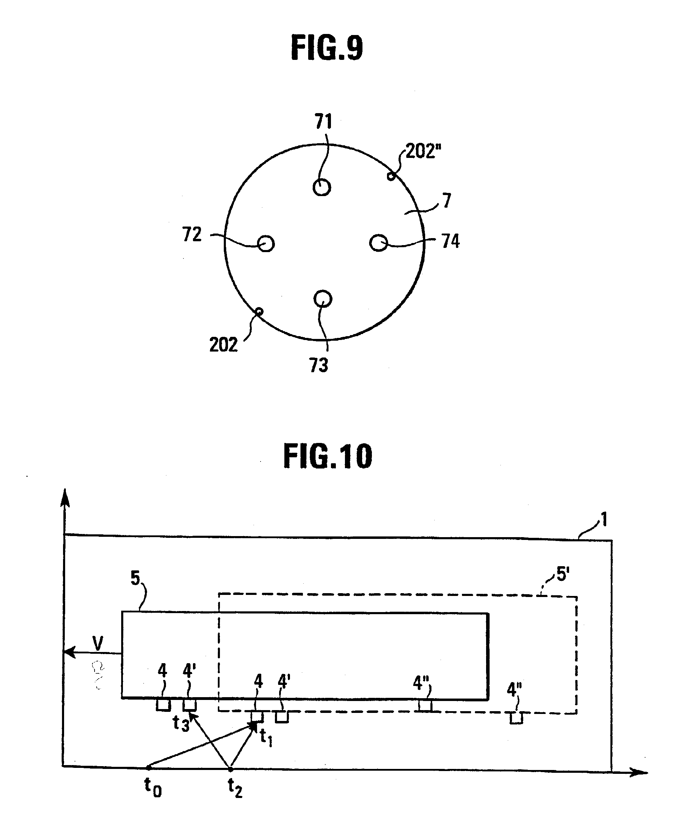

Fig. 10 zeigt, wie die Bildverarbeitungseinrichtung 203 Bewegungsmuster des Bearbeitungswerkzeugs 7 auswertet und dadurch feststellen kann, ob eine vorgegebene Anzahl von Bearbeitungsvorgängen an den jeweiligen Bearbeitungsstellen 4 ausgeführt worden ist. Beispielsweise hat die Bedienungsperson zum Zeitpunkt t0 eine Stecknuss montiert und zum Zeitpunkt t1 eine Bearbeitung an der Bearbeitungsstelle 4 vorgenommen, beim Zeitpunkt t2 die Stecknuss ausgetauscht und dann eine Bearbeitung an der Bearbeitungsstelle 4' zum Zeitpunkt t3 vorgenommen. Natürlich hat sich bei dem Zeitablauf t0 - t3 das Werkstück 5' -> 5 in Transportrichtung weiterbewegt. Wenn also fortlaufend auf Grundlage der Bewegungsmuster die relativen Abstände zwischen Bearbeitungswerkzeug und Bearbeitungsstelle ausgewertet werden, so kann immer erkannt werden, ob eine vorgegebene Bearbeitungsstelle bearbeitet worden ist.

Eine Freigabeeinrichtung kann beispielsweise das Bearbeitungswerkzeug 7 an einer vorgegebenen Bearbeitungsstelle 4'' nur dann freigegeben, wenn die Erkennungseinrichtung, d.h. die Bildverarbeitungseinrichtung, eine vorgegebene Anzahl von Bearbeitungsvorgängen in dem Bereich einer vorangehenden Bearbeitungsstelle 4, 4' bereits durchgeführt hat. Damit wird sichergestellt, dass keine Bearbeitungsstelle ausgelassen wird.

Die Erkennungseinrichtung 200 kann die jeweiligen Bearbeitungsparameter auf Grundlage der festgestellten relativen Position (d.h. des Abstandes) von Bearbeitungswerkzeug 7 und Bearbeitungsstelle 4 einstellen. Das heißt, erst wenn der Abstand zwischen Werkstück und einer vorgegebenen Bearbeitungsstelle kleiner als sämtliche Abstände zu anderen Bearbeitungsstellen ist, was durch die Koordinatenberechnung ermittelt werden kann, dann stellt die Vorgabeeinrichtung die jeweiligen Bearbeitungsparameter für die jeweilige Bearbeitungsstelle ein und gibt erst dann das Werkzeug frei.

Wie voranstehend erläutert, werden die Koordinaten beim Durchlauf des Werkstücks fortlaufend berechnet, z.B. in Zeitinkrementen. Daraus kann die Erkennungseinrichtung die Bewegungsgeschwindigkeit des Werkstücks aufgrund einer zeitlichen Verfolgung der Positionsänderung des Werkstücks, beispielsweise einer oder mehrere Bearbeitungsstellen 4, erfassen.

Das Werkstück 5 kann wie bei dem ersten Aspekt ein Kraftfahrzeug oder ein Teil eines Kraftfahrzeugs sein, wobei das Bearbeitungswerkzeug 7 einen oder mehrere Drehschrauber umfasst und die vorgegebenen Bearbeitungsparameter Verschraubungsparameter sind. Die Verschraubungsparameter umfassen ein Drehmoment und/oder einen Drehwinkel der einen oder mehreren Drehschrauber.

Insbesondere wenn das Bearbeitungswerkzeug 7 einen Satz von Bearbeitungseinheiten 71 - 74 umfasst, wie in Fig. 9 gezeigt, kann der Erfassung der Winkelorientierung wie voranstehend erläutert besondere Bedeutung zukommen. Das heißt, wenn beispielsweise bei einem Teil einer Fahrzeugkarosserie an einem bestimmten Abschnitt Bearbeitungen mehrmals vorgenommen werden müssen, wobei jeweils das Fig. 9 gezeigte Bearbeitungswerkzeug 7 unter verschiedenen Winkelorientierungen an die Bearbeitungsstelle (n) angelegt werden muss, so kann eine Zähleinrichtung der Erkennungseinrichtung feststellen, ob die Bearbeitungseinheiten an einer vorgegebenen Bearbeitungsstelle bereits eine vorgegebene Anzahl von Orientierungsstellen angenommen haben, bevor eine Freigabeeinrichtung das Bearbeitungswerkzeug zur Bearbeitung an einer weiteren Bearbeitungsstelle freigibt. Ein Beispiel davon ist der Fall, bei dem ein Satz von Drehschraubern 71 - 74 mehrmals jeweils rotationsmäßig um einen Winkel versetzt an eine Radbefestigung angelegt wird. Eine Radaufhängung kann z.B. 8 Schrauben umfassen und daher muss das Bearbeitungswerkzeug mit den vier Drehschraubern zweimal in unterschiedlichen Winkelstellungen angelegt werden.

Wie voranstehend erläutert, wird gemäß dem zweiten Aspekt der Erfindung die Koordinatenlage des Bearbeitungswerkzeugs und des Bearbeitungswerkstücks (oder dessen Bearbeitungsstellen) bestimmt, wobei auf Grundlage dieser Koordinatenlagebestimmung fortlaufend errechnet werden kann, an welcher Stelle das Bearbeitungswerkzeug gerade schraubt, so dass die jeweils richtigen Bearbeitungsparameter vorgegeben werden können und keine Bearbeitungsstelle bei der Bearbeitung ausgelassen werden kann. Es wird hier also implizit die Lage der Bearbeitungsstelle im Bearbeitungsbereich 1 bestimmt. Es ist natürlich auch möglich, dass die Bildverarbeitungseinrichtung direkt die Bearbeitungsstellen erkennt, wie beim ersten Aspekt der Erfindung.

Gemäß dem zweiten Aspekt der Erfindung können insbesondere eine vorgegebene Anzahl von Bearbeitungsvorgängen an bestimmten Werkzeugabschnitten erkannt werden, nämlich durch die Erfassung des Bearbeitungswerkzeugs, die Erfassung des Montagebereichs und die Bestimmung der relativen Positionen. Bei den Markierungen kann es sich beispielsweise um einen Strichcode oder um eine leuchtende Markierung handeln. Diese können auch auf einem Bildschirm angezeigt werden, so dass die Erkennungseinrichtung 200 on-line einen Bearbeitungsvorgang zeitlich dargestellt, ähnlich wie in Fig. 10.

Auch im zweiten Aspekt der Erfindung kann ein Bearbeitungswerkzeug mit einer aufgesetzten oder integrierten Bildaufnahmeeinrichtung 20a wie unter Bezugnahme auf den ersten Aspekt der Erfindung beschrieben, verwendet werden. Somit können sämtliche Ausführungsformen der ersten und zweiten Aspekte in Kombination zur verbesserten Prozessabsicherung verwendet werden. Beispielsweise kann die aufgesetzte oder integrierte Bildaufnahmeeinrichtung für die Erkennung von Bearbeitungsstellen an schwer zugänglichen Stellen verwendet werden, wenn bei dem zweiten Aspekt der Erfindung das Werkstück nicht von sämtlichen Seiten mittels mehrerer Bildaufnahmeeinrichtungen abgetastet wird.

### Gewerbliche Anwendbarkeit

Obwohl die ersten und zweiten Aspekte der Erfindung unter Bezugnahme auf ein Beispiel aus der Automobiltechnik beschrieben worden ist, sei darauf hingewiesen, dass die Bearbeitungsvorrichtung und das Bearbeitungswerkzeug gemäß der Erfindung bei beliebigen Bearbeitungsvorgängen an einem Werkstück angewendet werden können.

Auf Grundlage der obigen Beschreibung sind zahlreiche Modifikationen und Änderungen der Erfindung möglich, ohne von dem Umfang der Erfindung, so wie sie in den beigefügten Ansprüchen definiert ist, abzuweichen. Insbesondere umfaßt die Erfindung Ausführungsformen, die sich durch eine Kombination von in den Ansprüchen oder in der Beschreibung einzeln aufgeführten Merkmalen ergeben.

Bezugszeichen in den Ansprüchen dienen dem besseren Verständnis und engen den Schutzumfang der Erfindung nicht ein.

Die nachfolgenden Absätze erläutern weitere erste bis fünfunddreißigste Aspekte 1-35 der Bearbeitungsvorrichtung bzw. des Bearbeitungswerkzeugs der Erfindung wie teilweise schon voranstehend beschrieben:
1. Bearbeitungsvorrichtung zur Bearbeitung eines Werkstücks (5), das sich in einem vorgegebenen Bearbeitungsbereich (1) befindet, an einer Vielzahl von Bearbeitungsstellen (4), umfassend mindestens ein Bearbeitungswerkzeug (7) zur Bearbeitung des Werkstücks (5) an den jeweiligen Bearbeitungsstellen (4) und eine Erkennungseinrichtung zur Erkennung, ob sich das Bearbeitungswerkzeug (7) in dem Bearbeitungsbereich (1) befindet, wobei die Erkennungseinrichtung (20; 200) ausgelegt ist, um die jeweiligen Bearbeitungsstellen (4) am Werkstück (5) zu erkennen.
2. Bearbeitungsvorrichtung nach Aspekt 1, wobei eine Bearbeitungsparameter-Vorgabeeinrichtung (8) zur Vorgabe der Bearbeitungsparameter für die jeweiligen Bearbeitungsstellen (4) vorgesehen ist und die Bearbeitungsparameter-Vorgabeeinrichtung (8) auf Grundlage der von der Erkennungseinrichtung (20; 200) erkannten Bearbeitungsstellen (4) die Vorgabe der Bearbeitungsparameter vornimmt.
3. Bearbeitungsvorrichtung nach Aspekt 1,
   ***wobei***
   die Erkennungseinrichtung (20) eine Bildaufnahmeeinrichtung zur Aufnahme eines Bilds wenigstens eines Abschnitts des Werkstücks (5), in dem sich wenigstens eine Bearbeitungsstelle (4) befindet, umfasst.
4. Bearbeitungsvorrichtung nach Aspekt 3,
   ***wobei***
   die Bildaufnahmeeinrichtung (20a) auf das Werkzeug (7) aufgesetzt ist.
5. Bearbeitungsvorrichtung nach Aspekt 3,
   ***wobei***
   die Bildaufnahmeeinrichtung (20a) integral in dem Werkzeug (7) angeordnet ist.
6. Bearbeitungsvorrichtung nach Aspekt 3,
   ***wobei***
   die Bildaufnahmeeinrichtung (20a) in dem Bearbeitungsbereich (1) angeordnet ist und ein Bild zumindest eines Teils des Bearbeitungsbereichs (1) aufnimmt, in dem sich mindestens ein Werkstück (5) befindet.
7. Bearbeitungsvorrichtung nach Aspekt 3,
   ***wobei***
   die Bildaufnahmeeinrichtung (20a) eine Kamera ist.
8. Bearbeitungsvorrichtung nach Aspekt 7,
   ***wobei***
   die Kamera eine Videokamera oder eine Infrarotkamera ist.
9. Bearbeitungsvorrichtung nach Aspekt 4 oder 5,
   ***wobei***
   das Bearbeitungswerkzeug (7) eine Beleuchtungsvorrichtung umfasst, die den Bearbeitungsbereich (1) oder einen Teil davon vor dem Bearbeitungswerkzeug (7) beleuchtet.
10. Bearbeitungsvorrichtung nach Aspekt 3,
   ***wobei***
   die Erkennungseinrichtung (20) ferner eine Bildverarbeitungseinrichtung (21) und einen Bildspeicher (22) umfasst, wobei die Bildverarbeitungseinrichtung (21) ein von der Bildaufnahmeeinrichtung (20a) aufgenommenes Bildmuster mit in dem Bildspeicher (22) gespeicherten vorgegebenen Bearbeitungsstellen-Bildmustern vergleicht und ein Erkennungssignal (ES) über die Erkennung einer vorgegebenen Bearbeitungsstelle an die Bearbeitungsparameter-Vorgabeeinrichtung (8) ausgibt, wenn eine Übereinstimmung zwischen dem aufgenommenen Bildmuster und einem gespeicherten Bearbeitungsstellen-Bildmuster festgestellt wird.
11. Bearbeitungsvorrichtung nach Aspekt 10,
   ***wobei***
   die Bildverarbeitungseinrichtung (21) die Bilddaten der von der Bildaufnahmeeinrichtung (20a) aufgenommenen Bildmuster mit den Bilddaten der im Bildspeicher (22) gespeicherten Bildmuster mit Hilfe einer Logik (FL) vergleicht.
12. Bearbeitungsvorrichtung nach Aspekt 11,
   ***wobei***
   die Logik (FL) eine Fuzzy-Logik (FL) ist.
13. Bearbeitungsvorrichtung nach Aspekt 1,
   ***wobei***
   die Erkennungseinrichtung (20) eine an einer jeweiligen Bearbeitungsstelle (4) des Werkstücks (5) angebrachte Sendeeinrichtung (20c), die ein die Bearbeitungsstelle (4) kennzeichnendes Signal ausgibt, und eine Empfangseinrichtung (20b) zum Empfang des jeweiligen Signals umfasst.
14. Bearbeitungsvorrichtung nach Aspekt 13,
   ***wobei***
   die Sende- und Empfangseinrichtung (20c, 20b) ein Infrarotsystem sind.
15. Bearbeitungsvorrichtung nach Aspekt 1,
   ***wobei***
   die Erkennungseinrichtung (20) einen an einer jeweiligen Bearbeitungsstelle (4) des Werkstücks (5) angebrachten Code (20e), der die jeweilige Bearbeitungsstelle kennzeichnet, und eine Codeleseeinrichtung (20d) zum Lesen des jeweiligen Codes (20e) umfasst, wobei die Erkennungseinrichtung (20) die jeweilige Bearbeitungsstelle auf Grundlage des gelesenen Codes erkennt.
16. Bearbeitungsvorrichtung nach Aspekt 1,
   ***wobei***
   das Bearbeitungswerkzeug (7) ein Drehschrauber ist und die von der Bearbeitungsparameter-Vorgabeeinrichtung (8) vorgegebenen Bearbeitungsparameter ein vorgegebenes Drehmoment und/oder ein vorgegebener Drehwinkel sind.
17. Bearbeitungsvorrichtung nach Aspekt 1,
   ***wobei***
   das Werkstück (4) ein Kraftfahrzeug oder ein Teil eines Kraftfahrzeugs ist, wobei die Bearbeitungsstelle (4) vorgegebene Montagestellen an dem Kraftfahrzeug oder an dem Teil sind, der Bearbeitungsbereich (1) ein vorgegebener Montagebereich einer Montagestraße ist, und die Bearbeitung die Montage von Montageteilen an den vorgegebenen Montagestellen ist.
18. Bearbeitungsvorrichtung nach Aspekt 1, ferner umfassend eine Freigabeeinrichtung, die eine Bearbeitung mit dem Bearbeitungswerkzeug (7) mit den vorgegebenen Bearbeitungsparametern nur dann freischaltet, wenn die Erkennungseinrichtung (20) die vorgegebene Bearbeitungsstelle (4) erkennt.
19. Bearbeitungsvorrichtung nach Aspekt 1 und 3, ferner umfassend eine Zähleinrichtung zum Zählen der Anzahl, wie oft die Erkennungseinrichtung (20) eine vorgegebenen Bearbeitungsstelle erkennt und wie oft eine Bearbeitung mit dem Bearbeitungswerkzeug (7) mit den voreingestellten Bearbeitungsparametern an dieser Bearbeitungsstelle (4) ausgeführt wird.
20. Bearbeitungsvorrichtung nach Aspekt 14,
   ***wobei***
   der an der Bearbeitungsstelle (4) angebrachte Code (20e) ein Bearbeitungsstrichcode ist.
21. Bearbeitungsvorrichtung nach Aspekt 1, ferner umfassend eine Ist-Bearbeitungsparameter-Erfassungseinrichtung zur Erfassung von Ist-Bearbeitungsparametern während des Bearbeitungsvorgangs an der jeweiligen Bearbeitungsstelle (4) und eine Vergleichseinrichtung (10) zum Vergleichen der erfassten Ist-Bearbeitungsparameter mit den Soll-Bearbeitungsparametern und zur Steuerung des Bearbeitungswerkzeugs (7) so, dass bei dem Bearbeitungsvorgang der Ist- mit dem Soll-Bearbeitungsparameter in Übereinstimmung gebracht wird.
22. Bearbeitungswerkzeug (7) zur Bearbeitung eines Werkstücks (5) an einer Vielzahl von Bearbeitungsstellen (4), ferner umfassend eine Erkennungseinrichtung (20; 200) zum Erkennen der jeweiligen Bearbeitungsstellen (4) am Werkstück (5).
23. Bearbeitungswerkzeug (7) nach Aspekt 22,
   ***wobei***
   die Erkennungseinrichtung (20) eine Bildaufnahmeeinrichtung (20a) zur Aufnahme eines Bilds wenigstens eines Abschnitts des Werkstücks (5), in dem sich wenigstens eine Bearbeitungsstelle (4) befindet, umfasst, wobei die Bildaufnahmeeinrichtung (20a) auf das Werkzeug (7) aufgesetzt oder integral in dem Werkzeug (7) angeordnet ist.
24. Bearbeitungsvorrichtung zur Bearbeitung eines Werkstücks (5), welches sich in einem vorgegebenen Bearbeitungsbereich (1) befindet, an einer Vielzahl von Bearbeitungsstellen (4) mit vorgegebenen Bearbeitungsparametern, umfassend mindestens ein Bearbeitungswerkzeug (7) zur Bearbeitung des Werkstücks (5) an den vorgegebenen Bearbeitungsstellen (4) und eine Erkennungseinrichtung (200) zur Erkennung, ob sich das Bearbeitungswerkzeug (7) in dem Bearbeitungsbereich (1) befindet,
   ***wobei***
   die Erkennungseinrichtung (200) ausgelegt ist,
   - um die Lage des Bearbeitungswerkzeugs (7) im Bearbeitungsbereich (1) zu erkennen;
   - die Lage des Werkstücks (5) im Bearbeitungsbereich (1) zu erkennen; und
   - daraus die relative Lage des Bearbeitungswerkzeugs (7) zu der jeweiligen Bearbeitungsstelle (4) zu bestimmen.
25. Bearbeitungsvorrichtung nach Aspekt 24,
   ***wobei***
   das Bearbeitungswerkzeug (7) mit mindestens einer Markierung (202) versehen ist und die Erkennungseinrichtung (200) eine Bildaufnahmeeinrichtung (201) zur Aufnahme eines Bilds des Bearbeitungsbereichs (1) und eine Bildverarbeitungseinrichtung (203) zum Erkennen der Lage des Bearbeitungswerkzeugs (7) durch Verarbeitung des Bilds der mindestens einen Markierung (202) und des Werkstücks (5) umfaßt.
26. Bearbeitungsvorrichtung nach Aspekt 25,
   ***wobei***
   die Bildverarbeitungseinrichtung (203) Bewegungsmuster des Bearbeitungswerkzeugs (7) auswertet und feststellt, ob eine vorgegebene Anzahl von Bearbeitungsvorgängen an den jeweiligen Bearbeitungsstellen (4) ausgeführt worden ist.
27. Bearbeitungsvorrichtung nach Aspekt 24,
   ***wobei***
   eine Freigabeeinrichtung das erkannte Bearbeitungswerkzeug (7) an einer vorgegebenen Bearbeitungsstelle (4'') nur dann freigibt, wenn die Erkennungseinrichtung (200) eine vorgegebene Anzahl von Bearbeitungsvorgängen an einer vorangehenden Bearbeitungsstelle (4) erkannt hat.
28. Bearbeitungsvorrichtung nach Aspekt 24,
   ***wobei***
   die Erkennungseinrichtung (200) die jeweiligen Bearbeitungsparameter auf Grundlage der festgestellten relativen Position von Bearbeitungswerkzeug (7) und Bearbeitungsstelle (4) einstellt.
29. Bearbeitungsvorrichtung nach Aspekt 24,
   ***wobei***
   die Erkennungseinrichtung (200) die Bewegungsgeschwindigkeit des Werkstücks (4) auf Grund einer zeitlichen Verfolgung der Positionsänderung von einer oder mehreren Bearbeitungsstellen (4) erfasst.
30. Bearbeitungsvorrichtung nach Aspekt 24,
   ***wobei***
   die Erkennungseinrichtung (200) eine Winkelorientierung des Bearbeitungswerkzeugs (7) zu einer vorgegebenen Bearbeitungsstelle (4) erkennt.
31. Bearbeitungsvorrichtung nach Aspekt 27,
   ***wobei***
   das Bearbeitungswerkzeug (7) einen Satz von Bearbeitungseinheiten (71-74) mit einer vorgegebenen Orientierung umfasst, wobei die Freigabeeinrichtung die Bearbeitungseinheiten an einer nächsten Bearbeitungsstelle erst dann freigibt, wenn eine Zähleinrichtung der Erkennungseinrichtung (200) festgestellt hat, dass die Bearbeitungseinheiten (7) an einer vorherigen Bearbeitungsstelle eine vorgegebene Anzahl von Orientierungsstellungen angenommen haben.
32. Bearbeitungsvorrichtung nach Aspekt 24,
   ***wobei***
   das Werkstück (5) ein Kraftfahrzeug oder ein Teil eines Kraftfahrzeugs ist, die Bearbeitungsstelle (4) eine vorgegebene Montagestelle an dem Kraftfahrzeug oder an dem Teil ist, der Bearbeitungsbereich (1) ein Montagebereich einer Montagestraße für Kraftfahrzeuge ist, das Bearbeitungswerkzeug (7) einen oder mehrere Drehschrauber umfasst, und die vorgegebenen Bearbeitungsparameter Verschraubungsparameter der einen oder mehreren Drehschrauber sind.
33. Bearbeitungsvorrichtung nach Aspekt 32,
   ***wobei***
   die Verschraubungsparameter ein Drehmoment und/oder einen Drehwinkel der einen oder mehreren Drehschrauber umfassen.
34. Bearbeitungsvorrichtung nach Aspekt 25,
   ***wobei***
   die Erkennungseinrichtung (200) einen Werkstückspeicher (204) zum Speichern der Werkstückabmessungen umfasst und die Bildverarbeitungseinrichtung (203) die Lage eines Referenzkoordinatenpunkts des Werkstückbilds (51) und die Lage der Werkzeugmarkierung (202) in einem zum Bearbeitungsbereich (1) festen Koordinatensystem (x, y) bestimmt und die relative Lage des Werkzeugs zum Werkstück durch Auswerten der Abstände zwischen den Koordinaten des Markierung und den jeweiligen Bearbeitungsstellen (4) unter Bezugnahme auf die im Werkstückspeicher (204) gespeicherten Werkstückabmessungen bestimmt.
35. Bearbeitungsvorrichtung nach Aspekt 30 und 34,
   ***wobei***
   das Werkzeug mit zwei Markierungen (202, 202') versehen ist und die Bildverarbeitungseinrichtung (203) die Winkelorientierung des Werkzeugs zur Bearbeitungsstelle (4) aufgrund einer Auswertung der Koordinaten beider Markierungen zu den Koordinaten der Bearbeitungsstellen (4) bestimmt.

## Patentansprüche

1. Bearbeitungsvorrichtung mit einem Bearbeitungswerkzeug (7) zur Bearbeitung eines Werkstücks (5) an einer Vielzahl von Bearbeitungsstellen, umfassend:
a) eine Erkennungseinrichtung (20; 200), die ausgelegt ist, um die jeweiligen Bearbeitungsstellen (4) am Werkstück (5) zu erkennen; wobei
b) die Erkennungseinrichtung (20) eine an einer jeweiligen Bearbeitungsstelle (4) des Werkstücks (5) angebrachte Sendeeinrichtung (20c), die ein die Bearbeitungsstelle (4) kennzeichnendes Signal ausgibt, und eine Empfangseinrichtung (20b) zum Empfang des jeweiligen Signals umfasst.

2. Bearbeitungsvorrichtung nach Anspruch 1,
***gekennzeichnet durch***
eine Bearbeitungsparameter-Vorgabeeinrichtung (8) zur Vorgabe der Bearbeitungsparameter für die jeweiligen Bearbeitungsstellen (4) auf Grundlage des jeweiligen die jeweilige Bearbeitungsstelle (4) kennzeichnenden Erkennungssignals (ES).

3. Bearbeitungsvorrichtung nach Anspruch 1,
***dadurch gekennzeichnet, dass***
das Bearbeitungswerkzeug (7) eine Beleuchtungsvorrichtung umfasst, die den Bearbeitungsbereich (1) oder einen Teil davon vor dem Bearbeitungswerkzeug (7) beleuchtet.

4. Bearbeitungsvorrichtung nach Anspruch 1,
***dadurch gekennzeichnet, dass***
die Sende- und Empfangseinrichtung (20c, 20b) ein Infrarotsystem sind.

5. Bearbeitungsvorrichtung nach Anspruch 1,
***dadurch gekennzeichnet, dass***
das Bearbeitungswerkzeug (7) ein Drehschrauber ist und die von der Bearbeitungsparameter-Vorgabeeinrichtung (8) vorgegebenen Bearbeitungsparameter ein vorgegebenes Drehmoment und/oder ein vorgegebener Drehwinkel sind.

6. Bearbeitungsvorrichtung nach Anspruch 1,
***dadurch gekennzeichnet, dass***
das Werkstück (4) ein Kraftfahrzeug oder ein Teil eines Kraftfahrzeugs ist, wobei die Bearbeitungsstellen (4) vorgegebene Montagestellen an dem Kraftfahrzeug oder an dem Teil sind, und die Bearbeitung die Montage von Montageteilen an den vorgegebenen Montagestellen ist.

7. Bearbeitungsvorrichtung nach Anspruch 1,
***gekennzeichnet durch*** eine Freigabeeinrichtung, die eine Bearbeitung mit dem Bearbeitungswerkzeug (7) mit den vorgegebenen Bearbeitungsparametern nur dann freischaltet, wenn die Erkennungseinrichtung (20) die vorgegebene Bearbeitungsstelle (4) erkennt.

8. Bearbeitungsvorrichtung nach Anspruch 1,
***gekennzeichnet durch*** eine Zähleinrichtung zum Zählen der Anzahl, wie oft die Erkennungseinrichtung (20) eine vorgegebenen Bearbeitungsstelle erkennt und wie oft eine Bearbeitung mit dem Bearbeitungswerkzeug (7) mit den voreingestellten Bearbeitungsparametern an dieser Bearbeitungsstelle (4) ausgeführt wird.

9. Bearbeitungsvorrichtung nach Anspruch 1,
***gekennzeichnet durch***
eine Ist-Bearbeitungsparameter-Erfassungseinrichtung zur Erfassung von Ist-Bearbeitungsparametern während des Bearbeitungsvorgangs an der jeweiligen Bearbeitungsstelle (4) und eine Vergleichseinrichtung (10) zum Vergleichen der erfassten Ist-Bearbeitungsparameter mit den Soll-Bearbeitungsparametern und zur Steuerung des Bearbeitungswerkzeugs (7) so, dass bei dem Bearbeitungsvorgang der Ist- mit dem Soll-Bearbeitungsparameter in Übereinstimmung gebracht wird.
